# EUROPEAN PATENT APPLICATION

(11) **EP 4 797 800 A1**
(43) Date of publication of application: **26.08.2026**
(21) Application number: 24887955.3
(22) Date of filing: 05.11.2024
(51) Int. Cl.: H04W 40/20

(54) **COMMUNICATION METHOD AND APPARATUS, AND COMPUTER-READABLE STORAGE MEDIUM**

(30) Priority: 07.11.2023 CN 202311481523
(71) Applicant: HUAWEI TECHNOLOGIES CO., LTD., Shenzhen 518129 (CN)
(72) Inventor: HU, Yajie, Shenzhen, Guangdong 518129 (CN); GE, Cuili, Shenzhen, Guangdong 518129 (CN); YANG, Yanmei, Shenzhen, Guangdong 518129 (CN)
(74) Representative: Goddar, Heinz J.
(86) International application number: PCT/CN2024/130008
(87) International publication number: WO 2025/098343

(57) **Abstract**

This application provides a communication method and apparatus, and a computer-readable storage medium. The communication method includes: A first EES receives a first request message from a terminal device, where the first request message is used to request an EAS corresponding to the terminal device; and sends, to the terminal device, information about a first EAS and at least one EAS corresponding to the terminal device. Based on technical solutions provided in this application, it can be ensured that a UPF and a first EAS that are connected to the terminal device are co-located. This can reduce a latency.

## Description

This application claims priority to Chinese Patent Application No. 202311481523.8, filed with the China National Intellectual Property Administration on November 7, 2023 and entitled "COMMUNICATION METHOD AND APPARATUS, AND COMPUTER-READABLE STORAGE MEDIUM", which is incorporated herein by reference in its entirety.

### TECHNICAL FIELD

This application relates to the field of wireless communication technologies, and in particular, to a communication method and apparatus, and a computer-readable storage medium.

### BACKGROUND

In the standalone (standalone, SA) 6 standard, an edge enabler server (edge enabler server, EES) platform discovery procedure and an edge application server (edge application server, EAS) discovery procedure are defined.

In an edge EDGE scenario, a latency between a current EES/EAS and a user plane function (user plane function, UPF) cannot be ensured. Therefore, how to reduce the latency is a technical problem to be urgently resolved.

### SUMMARY

Embodiments of this application provide a communication method and apparatus, and a computer-readable storage medium, to ensure that a UPF and a first EAS that are connected to a terminal device are co-located. This can reduce a latency.

According to a first aspect, this application provides a communication method. The method may be applied to a first EES, or may be applied to an apparatus (for example, a chip, a chip system, or a circuit) in the first EES, or an apparatus that can be used together with a terminal device. The following provides descriptions by using an example in which the method is applied to the first EES. The method may include: receiving a first request message from the terminal device, where the first request message is used to request an EAS corresponding to the terminal device; and sending, to the terminal device, information about a first EAS or at least one EAS corresponding to the terminal device.

In the solution provided in this application, the terminal device may obtain the first EAS (the first EAS may also be understood as a target EAS of the terminal device) from the first EES via the first request message. Specifically, after receiving the first request message, the first EES may determine the first EAS based on UPF information corresponding to the at least one EAS, and then send the first EAS to the terminal device. Alternatively, the terminal device obtains the information about the at least one EAS from the first EES via the first request message, and determines the first EAS based on UPF information corresponding to the at least one EAS. In a current edge EDGE scenario, an EES, an EAS, and a UPF are deployed and selected at a granularity of a data network access identifier (data network access identifier, DNAI). However, one DNAI may correspond to a plurality of UPFs and a plurality of EESs/EASs. Consequently, a latency between the current EES/EAS and the UPF cannot be ensured. A difference between the conventional technology and the solutions provided in this application lies in that the first EES or the terminal device may select, based on a correspondence between an EAS and a UPF, the first EAS that matches the terminal device. Therefore, the UPF and the first EAS that correspond to the terminal device are co-located, for example, deployed in a same equipment room/data center; or the first EAS is closest to the UPF corresponding to the terminal device, to ensure a shortest N6 latency. This can further reduce a latency.

In a possible implementation, the method further includes: determining the first EAS based on the UPF information corresponding to the at least one EAS.

In a possible implementation, the method further includes: obtaining the UPF information corresponding to the at least one EAS.

In a possible implementation, the obtaining the UPF information corresponding to the at least one EAS includes: receiving a second request message of the at least one EAS, where the second request message includes the UPF information corresponding to the EAS.

In a possible implementation, the first request message includes information about the terminal device, and that the EES determines, based on the UPF information corresponding to the at least one EAS corresponding to the terminal device, the first EAS corresponding to the terminal device includes: The EES obtains, based on the information about the terminal device, a UPF corresponding to the terminal device; and the EES determines the first EAS based on the UPF corresponding to the terminal device and the UPF information corresponding to the at least one EAS.

In a possible implementation, the first request message includes UPF information of the first EES corresponding to the terminal device, and that the EES determines, based on the UPF information corresponding to the at least one EAS corresponding to the terminal device, the first EAS corresponding to the terminal device includes: determining the first EAS based on the UPF information of the first EES and the UPF information corresponding to the at least one EAS.

In a possible implementation, the first request message includes indication information, the indication information indicates whether traffic influence has been performed on a first UPF, and the first UPF is a UPF corresponding to the first EES corresponding to the terminal device. That the EES determines, based on the UPF information corresponding to the at least one EAS corresponding to the terminal device, the first EAS corresponding to the terminal device includes: The EES determines the first EAS based on the indication information and the UPF information of the at least one EAS.

In a possible implementation, that the EES determines, based on the indication information and the UPF information of the at least one EAS corresponding to the terminal device, the first EAS corresponding to the terminal device includes: If the indication information indicates that traffic influence has been performed on the first UPF, the EES determines that an EAS corresponding to a same UPF as the first EES is the first EAS; or if the indication information indicates that traffic influence is not performed on the first UPF, the EES sends a third request message to a 5GC, where the third request message is used to request to modify a user plane path of the first UPF, and the third request message includes information about the first UPF; and the EES determines that an EAS corresponding to the first UPF whose user plane path has been modified is the first EAS.

In a possible implementation, the method further includes: The EES sends, to the terminal device, the UPF information corresponding to the at least one EAS corresponding to the terminal device.

In a possible implementation, the sending, to the terminal device, the information about the first EAS or the at least one EAS corresponding to the terminal device includes: sending a first response message to the terminal device, where the first response message is in response to the first request message, and the first response message includes the information about the first EAS or the at least one EAS.

In a possible implementation, the UPF information includes one or more of an identifier (identifier, ID) of a UPF, a uniform resource identifier (uniform resource identifier, URI) of the UPF, a fully qualified domain name (fully qualified domain name, FQDN), and an Internet protocol (Internet protocol, IP) address.

According to a second aspect, this application provides a communication method. The method may be applied to an EES, or may be applied to an apparatus (for example, a chip, a chip system, or a circuit) in the EES, or an apparatus that can be used together with an EES. The following provides descriptions by using an example in which the method is applied to the EES. The method may include: The EES receives a first request message from a terminal device, where the first request message is used to request an EAS corresponding to the terminal device, and the first request message includes information about the terminal device. The EES determines, based on the information about the terminal device, a first EAS corresponding to the terminal device. The EES sends a third request message to a 5GC, where the third request message is used to request to modify a user plane path of a first UPF, the third request message includes information about the first UPF, and the first UPF is a UPF corresponding to the first EAS. The EES sends the first EAS to the terminal device, where the user plane path of the first UPF corresponding to the first EAS has been modified.

In the solution provided in this application, the first EES may select the matching first EAS based on a UPF currently corresponding to the terminal device and a correspondence between at least one EAS and the UPF. Therefore, the UPF and the first EAS that correspond to the terminal device are co-located, for example, deployed in a same equipment room/data center; or the first EAS is closest to the UPF corresponding to the terminal device, to ensure a shortest N6 latency.

In a possible implementation, the method may further include: The EES receives a third response message from the terminal device, where the third response message is used to respond to the third request message.

In a possible implementation, that the EES sends the first EAS to the terminal device includes: The EES sends a first response message to the terminal device, where the first response message is in response to the first request message, and the first response message includes the information about the first EAS.

According to a third aspect, this application provides a communication method. The method may be applied to an ECS, or may be applied to an apparatus (for example, a chip, a chip system, or a circuit) in the ECS, or an apparatus that can be used together with an ECS. The following provides descriptions by using an example in which the method is applied to the ECS. The method may include: The ECS receives a fourth request message from a terminal device, where the fourth request message is used to request an edge enabler server EES corresponding to the terminal device. The ECS determines, based on UPF information corresponding to at least one EES corresponding to the terminal device, a first EES corresponding to the terminal device. The ECS sends information about the first EES to the terminal device.

It should be understood that an execution body of the third aspect may be the ECS, and specific content of the third aspect corresponds to content of the first aspect and the second aspect. For corresponding features of the third aspect and beneficial effect achieved by the third aspect, refer to the descriptions of the first aspect and the second aspect. To avoid repetition, detailed descriptions are properly omitted herein.

In a possible implementation, the method further includes: The ECS obtains the UPF information corresponding to the at least one EES.

In a possible implementation, that the ECS obtains the UPF information corresponding to the at least one EES includes: The ECS receives a fifth request message from the at least one EES, where the fifth request message includes the UPF information corresponding to the EES.

In a possible implementation, the fourth request message includes information about the terminal device, and that the ECS determines, based on the UPF information corresponding to the at least one EES corresponding to the terminal device, the first EES corresponding to the terminal device includes: The ECS obtains, based on the information about the terminal device, a UPF corresponding to the terminal device; and the ECS determines the first EES based on the UPF corresponding to the terminal device and the UPF information corresponding to the at least one EES.

According to a fourth aspect, this application provides a communication method. The method may be applied to an ECS, or may be applied to an apparatus (for example, a chip, a chip system, or a circuit) in the ECS, or an apparatus that can be used together with an ECS. The following provides descriptions by using an example in which the method is applied to the ECS. The method may include: The ECS receives a fourth request message from a terminal device, where the fourth request message is used to request an edge enabler server EES corresponding to the terminal device, and the fourth request message includes information about the terminal device. The ECS determines, based on the information about the terminal device, a first EES corresponding to the terminal device; and sends information about the first EES and indication information to the terminal device based on UPF information corresponding to the first EES and UPF information corresponding to at least one EAS corresponding to the terminal device, where the indication information indicates whether traffic influence has been performed on a candidate UPF, and the candidate UPF is a UPF corresponding to one or more of the at least one EAS.

It should be understood that an execution body of the fourth aspect may be the ECS, and specific content of the fourth aspect corresponds to content of the first aspect and the second aspect. For corresponding features of the fourth aspect and beneficial effect achieved by the fourth aspect, refer to the descriptions of the first aspect and the second aspect. To avoid repetition, detailed descriptions are properly omitted herein.

In a possible implementation, if a UPF corresponding to the first EES is the same as a UPF corresponding to a first EAS, the method further includes: The ECS sends a sixth request message to a 5GC, where the sixth request message is used to request to modify a user plane path of a first UPF, and the third request message includes UPF information corresponding to the first EES or information about the first UPF; and receives a sixth response message from the 5GC, where the sixth response message is in response to the sixth request message, and the indication information indicates that traffic influence has been performed on the candidate UPF.

In a possible implementation, if the UPF corresponding to the first EES is different from the first UPF, the indication information indicates that traffic influence is not performed on the candidate UPF.

According to a fifth aspect, this application provides a communication method. The method may be applied to a terminal device, or may be applied to an apparatus (for example, a chip, a chip system, or a circuit) in the terminal device, or an apparatus that can be used together with the terminal device. The following provides descriptions by using an example in which the method is applied to the terminal device. The method may include: The terminal device sends a first request message to a first EES, where the first request message is used to request an EAS corresponding to the terminal device.

In a possible implementation, the method further includes: The terminal device receives information about the first EES and indication information from an ECS, where the indication information indicates whether traffic influence has been performed on a candidate UPF, and the candidate UPF is a UPF corresponding to one or more of at least one EAS.

In a possible implementation, the first request message includes the indication information.

In a possible implementation, the method further includes: The terminal device receives, from the EES, UPF information corresponding to the at least one EAS corresponding to the terminal device. The terminal device determines a first EAS based on the indication information, UPF information corresponding to the terminal device, and the UPF information of the at least one EAS.

In a possible implementation, the method further includes: receiving a first response message from the first EES, where the first response message is in response to the first request message, and the first response message includes the information about the first EAS or the at least one EAS corresponding to the terminal device.

According to a sixth aspect, an embodiment of this application provides a communication system. The communication system includes an ECS/first EES and a session management network element.

The ECS/first EES is configured to send a sixth request message/third request message to a network exposure function network element, where the sixth request message/third request message includes information about a first UPF, and the first UPF is a UPF of a first EAS corresponding to a terminal device.

The session management network element is configured to modify a user plane path of the first UPF for the terminal device based on the information about the first UPF.

In a possible implementation, the communication system further includes the network exposure function network element and a repository network element.

The network exposure function network element is configured to send the information about the first UPF to the session management network element or the repository network element.

In a possible implementation, the repository network element is configured to store the information about the first UPF.

In a possible implementation, the communication system further includes a policy control function network element.

The repository network element is further configured to send a seventh request message to the policy control function network element, where the seventh request message includes information about the terminal device and/or the information about the first UPF.

In a possible implementation, the policy control function network element is further configured to send an eighth request message to the session management network element, where the eighth request message includes the information about the terminal device and/or the information about the first UPF.

In a possible implementation, the network exposure function network element is further configured to send a sixth response message/third response message to the ECS/first EES, where the sixth response message is in response to the sixth request message, and the third response message is in response to the third request message.

In the solution provided in this application, on a network side, the user plane path of the UPF may be modified based on the UPF information of the first EAS. Therefore, the UPF and the first EES/first EAS that correspond to the terminal device are co-located, for example, deployed in a same equipment room/data center; or the first EES/first EAS is closest to the UPF connected to the terminal device, to ensure a shortest N6 latency.

According to a seventh aspect, an embodiment of this application provides a communication system. The communication system includes an ECS/first EES and a session management network element.

The ECS/first EES is configured to request the session management network element to determine the first EES/first EAS corresponding to a terminal device, where the request includes information about the terminal device.

The session management network element is configured to determine the first EES/first EAS based on UPF information corresponding to the terminal device and a correspondence between an EES/EAS and a UPF.

The session management network element is further configured to modify a user plane path of a UPF corresponding to the first EES and modify a user plane path of a first UPF, where the first UPF is a UPF corresponding to the first EAS.

The session management network element is further configured to send the first EES/first EAS to the ECS/first EES.

In a possible implementation, the communication system further includes:
the terminal device, configured to send a fourth request message/first request message to the ECS/first EES, where the fourth request message/first request message includes the information about the terminal device.

In a possible implementation, the communication system further includes:
a repository network element, configured to store the information about the terminal device.

In a possible implementation, the communication system further includes a network exposure function network element and a policy control function network element.

The ECS/first EES is specifically configured to request, by using the network exposure function network element, the repository network element, and the policy control function network element, the session management network element to determine the first EES/first EAS corresponding to the terminal device.

In a possible implementation, the session management network element is specifically configured to send the first EES/first EAS to the ECS/first EES by using the policy control function network element, the repository network element, and the network exposure function network element.

In a possible implementation, the communication system further includes:
an application function network element, configured to send the correspondence between the EAS and the UPF to the session management network element.

In a possible implementation, the ECS/first EES is further configured to send a fourth response message/first response message to the terminal device, where the fourth response message/first response message includes information about the first EES/first EAS.

In the technical solution in this application, on a network side, the first EES/first EAS of the terminal device may be determined, and the user plane path of the UPF corresponding to the first EES and the user plane path of the UPF corresponding to the first EAS may be modified. Therefore, the UPF and the first EES/first EAS that correspond to the terminal device are co-located, for example, deployed in a same equipment room/data center; or the first EES/first EAS is closest to the UPF connected to the terminal device, to ensure a shortest N6 latency.

According to an eighth aspect, an embodiment of this application provides a communication apparatus. The communication apparatus may be used in an EES, may be used in a module (for example, a chip or a processor) in the EES, or may be used in a logical module or software that can implement all or some functions of the EES. The communication apparatus has functions of implementing behavior in the method examples in the first aspect or any implementation of the first aspect and the second aspect or any implementation of the second aspect. The functions may be implemented by hardware, or may be implemented by hardware executing corresponding software. The hardware or the software includes one or more modules corresponding to the foregoing functions. For beneficial effect, refer to the descriptions in the first aspect and the second aspect. Details are not described herein again.

According to a ninth aspect, an embodiment of this application provides a communication apparatus. The communication apparatus may be used in an ECS, may be used in a module (for example, a chip or a processor) in the ECS, or may be used in a logical module or software that can implement all or some functions of the ECS. The communication apparatus has functions of implementing behavior in the method examples in the third aspect or any implementation of the third aspect and the fourth aspect or any implementation of the fourth aspect. The functions may be implemented by hardware, or may be implemented by hardware executing corresponding software. The hardware or the software includes one or more modules corresponding to the foregoing functions. For beneficial effect, refer to descriptions in the third aspect or the fourth aspect. Details are not described herein again.

According to a tenth aspect, an embodiment of this application provides a communication apparatus. The communication apparatus may be used in a terminal device, a module (for example, a chip or a processor) in the terminal device, or a logical module or software that can implement all or some functions of the terminal device. The communication apparatus has functions of implementing behavior in the method examples in the fifth aspect or any implementation of the fifth aspect. The functions may be implemented by hardware, or may be implemented by hardware executing corresponding software. The hardware or the software includes one or more modules corresponding to the foregoing functions. For beneficial effect, refer to descriptions of the fifth aspect. Details are not described herein again.

According to an eleventh aspect, a communication apparatus is provided. The communication apparatus may be the EES in the foregoing method embodiments, or may be an apparatus (for example, a chip, a chip system, or a circuit) in the EES. The communication apparatus may include a processor. Optionally, the communication apparatus may include a memory, an input interface, and an output interface. The input interface is configured to receive information from other communication apparatuses than the communication apparatus. The output interface is configured to output the information to other communication apparatuses than the communication apparatus. The processor is coupled to the memory. The memory is configured to store a program or instructions. When the program or the instructions are executed by the processor, the communication apparatus is enabled to perform the method in the first aspect or any implementation of the first aspect and the second aspect or any implementation of the second aspect.

According to a twelfth aspect, a communication apparatus is provided. The communication apparatus may be the ECS in the foregoing method embodiments, or may be an apparatus (for example, a chip, a chip system, or a circuit) in the ECS. The communication apparatus may include a processor. Optionally, the communication apparatus may include a memory, an input interface, and an output interface. The input interface is configured to receive information from other communication apparatuses than the communication apparatus. The output interface is configured to output the information to other communication apparatuses than the communication apparatus. The processor is coupled to the memory. The memory is configured to store a program or instructions. When the program or the instructions are executed by the processor, the communication apparatus is enabled to perform the method in the third aspect or any implementation of the third aspect and the fourth aspect or any implementation of the fourth aspect.

According to a thirteenth aspect, a communication apparatus is provided. The communication apparatus may be the terminal device in the foregoing method embodiments, or may be an apparatus (for example, a chip, a chip system, or a circuit) in the terminal device. The communication apparatus may include a processor. Optionally, the communication apparatus may include a memory, an input interface, and an output interface. The input interface is configured to receive information from other communication apparatuses than the communication apparatus. The output interface is configured to output the information to other communication apparatuses than the communication apparatus. The processor is coupled to the memory. The memory is configured to store a program or instructions. When the program or the instructions are executed by the processor, the communication apparatus is enabled to perform the method in the fifth aspect or any implementation of the fifth aspect.

According to a fourteenth aspect, this application provides a computer-readable storage medium. The computer-readable storage medium stores a computer program or computer instructions. When the computer program or the computer instructions are run, the methods in the first aspect and any possible implementation of the first aspect, the second aspect and any possible implementation of the second aspect, the third aspect and any possible implementation of the third aspect, the fourth aspect and any possible implementation of the fourth aspect, and the fifth aspect and any possible implementation of the fifth aspect are performed.

According to a fifteenth aspect, this application provides a computer program product including instructions. When the instructions are run on a computer, the computer is enabled to perform the methods in the first aspect and any possible implementation of the first aspect, the second aspect and any possible implementation of the second aspect, the third aspect and any possible implementation of the third aspect, the fourth aspect and any possible implementation of the fourth aspect, and the fifth aspect and any possible implementation of the fifth aspect.

According to a sixteenth aspect, this application provides a communication apparatus. The communication apparatus includes a processor, may further include a memory, and is configured to implement the methods in the first aspect and any possible implementation of the first aspect, the second aspect and any possible implementation of the second aspect, the third aspect and any possible implementation of the third aspect, the fourth aspect and any possible implementation of the fourth aspect, and the fifth aspect and any possible implementation of the fifth aspect. The communication apparatus may be a chip system. The chip system may include a chip, or may include a chip and another discrete component.

According to a seventeenth aspect, this application provides a communication system. The communication system includes at least one EES, at least one ECS, and at least one terminal device. When the at least one EES, the at least one ECS, and the at least one terminal device run in the communication system, any one of the methods in the first aspect to the fifth aspect is performed.

### BRIEF DESCRIPTION OF DRAWINGS

To describe embodiments of this application more clearly, the following briefly describes accompanying drawings used in embodiments. It is clear that a person of ordinary skill in the art can further obtain other drawings based on these accompanying drawings without creative efforts.
FIG. 1A is a diagram of a network architecture according to an embodiment of this application;
FIG. 1B is a diagram of an EES discovery procedure according to an embodiment of this application;
FIG. 1C is a diagram of an EAS discovery procedure according to an embodiment of this application;
FIG. 1D is a diagram of a method for triggering traffic influence according to an embodiment of this application;
FIG. 1E is a diagram of another method for triggering traffic influence according to an embodiment of this application;
FIG. 2 is an interaction diagram of a communication method according to an embodiment of this application;
FIG. 3A is an interaction diagram of a communication method according to an embodiment of this application;
FIG. 3B is an interaction diagram of another communication method according to an embodiment of this application;
FIG. 4A and FIG. 4B are an interaction diagram of still another communication method according to an embodiment of this application;
FIG. 5A and FIG. 5B are an interaction diagram of still another communication method according to an embodiment of this application;
FIG. 6 is an interaction diagram of still another communication method according to an embodiment of this application;
FIG. 7 is an interaction diagram of still another communication method according to an embodiment of this application;
FIG. 8A and FIG. 8B are an interaction diagram of still another communication method according to an embodiment of this application;
FIG. 9A and FIG. 9B are an interaction diagram of still another communication method according to an embodiment of this application;
FIG. 10 is a diagram of a structure of a communication apparatus according to an embodiment of this application;
FIG. 11 is a diagram of a structure of another communication apparatus according to an embodiment of this application;
FIG. 12 is a diagram of a structure of still another communication apparatus according to an embodiment of this application;
FIG. 13 is a diagram of a structure of still another communication apparatus according to an embodiment of this application; and
FIG. 14 is a diagram of a structure of a terminal device according to an embodiment of this application.

### DESCRIPTION OF EMBODIMENTS

The following describes technical solutions in embodiments of this application with reference to the accompanying drawings in embodiments of this application. The terms "system" and "network" may be used interchangeably in embodiments of this application. Unless otherwise specified, "/" represents an "or" relationship between associated objects. For example, A/B may represent A or B. "And/or" in this application describes only an association relationship of associated objects and represents that three relationships may exist. For example, A and/or B may represent the following three cases: Only A exists, both A and B exist, and only B exists, where A and B may be singular or plural. In addition, in the descriptions of this application, unless otherwise specified, "a plurality of" means two or more than two. "At least one of the following items (pieces)" or a similar expression thereof refers to any combination of these items, including any combination of singular items (pieces) or plural items (pieces). For example, at least one item (piece) of a, b, or c may indicate "a", "b", "c", "a and b", "a and c", "b and c", or "a, b, and c", where a, b, and c may be singular or plural. In addition, to clearly describe the technical solutions in embodiments of this application, the terms such as "first" and "second" are used in embodiments of this application to distinguish between same items or similar items that have basically same network elements or purposes. A person skilled in the art may understand that words such as "first" and "second" do not limit a quantity or an execution sequence, and words such as "first" and "second" do not indicate a definite difference.

Reference to "an embodiment", "some embodiments", or the like described in embodiments of this application means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment, instead, they mean "one or more but not all of embodiments", unless otherwise specifically emphasized. The terms "include", "have", "contain", and their variants all mean "include but are not limited to", unless otherwise specifically emphasized in another manner.

The objectives, technical solutions, and beneficial effect of this application are further described in detail in the following specific implementations. It should be understood that the following descriptions are merely specific implementations of this application, but are not intended to limit the protection scope of this application. Any modification, equivalent replacement, or improvement made based on the technical solutions of this application shall fall within the protection scope of this application.

The following first describes technical terms that may appear in embodiments of this application. Terms used in implementations of this application are merely used to explain specific embodiments of this application, but are not intended to limit this application. In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.
(1) In an understanding, an edge data network is a network logical concept. The edge data network includes one data network, is a local data network (local data network, local DN) that includes an edge enabler function, and may be identified by a DNAI and a data network name (data network name, application instance/edge). In another understanding, the EDN is a peer concept of a central cloud, and may be understood as a local data center (a geographical location concept). The EDN may be identified by a DNAI, and may include a plurality of local data networks.
(2) An application instance/edge application is an application deployed in the edge data network, and may specifically be an application program (for example, social media software, AR, or VR) of a server, or an instance (instance) deployed and running in the EDN. One application instance/edge application may be used to deploy one or more EASs in one or more EDNs. The EASs deployed and running in different EDNs may be considered as different EASs of the application instance/edge application, may share one domain name, and use one IP address or different IP addresses. In addition, the application instance/edge application may also be referred to as an edge application (server), an EAS, an edge application instance, a multi-access edge computing (multi-access edge computing, MEC) application (server), an EAS function, or the like.
(3) A data network access identifier (DNAI) is an identifier of a user plane for accessing a data network.
(4) Traffic influence (traffic influence) is a process in which a session management function (session management function, SMF) network element or a network exposure function (network exposure function, NEF) network element in a core network determines an optimized user plane path between a terminal device and an application server. An application client or the terminal device may access an edge data network (an EAS or an EES) via an appropriate UPF network element through traffic influence, to obtain a network application service. When there has been an optimized user plane path between the terminal device and the application server, the session management function network element or the network exposure function network element does not need to perform traffic influence. Traffic influence may be triggered by an enabler server, the application server, or a configuration server. Traffic influence may be performed in a form of direct triggering. For example, the enabler server directly sends an application function request message to the SMF or the NEF in the core network, to request to trigger traffic influence. Traffic influence may alternatively be performed in a form of indirect triggering. For example, the enabler server sends, to a selected application server, an indication message for triggering traffic influence, and then the selected application server sends an application function request message to the SMF or the NEF, to request to trigger traffic influence.

It should be noted that, in this application, the session management function network element and the network exposure function network element are merely used as an example to describe a process of performing traffic influence. In the future, traffic influence may alternatively be performed by another core network element, or the session management function network element and the network exposure function network element may alternatively have other names. This is not limited in embodiments of this application.

It should be understood that descriptions of the foregoing technical terms are merely examples. For example, with continuous development of technologies, ranges of the foregoing definitions may also change. This is not limited in embodiments of this application.

The technical solutions in embodiments of this application may be applied to various communication systems, for example, a global system for mobile communication (global system for mobile communication, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), an enhanced data rate for GSM evolution (enhanced data rate for GSM evolution, EDGE) system, and a worldwide interoperability for microwave access (worldwide interoperability for microwave access, WiMAX) system. The technical solutions in embodiments of this application may be further applied to another communication system, for example, a public land mobile network (public land mobile network, PLMN) system, a long term evolution advanced (LTE advanced, LTE-A) system, a fifth generation mobile communication (the 5th generation, 5G) system, a new radio (new radio, NR) system, a machine-to-machine (machine-to-machine, M2M) communication system, or another future evolved communication system. This is not limited in embodiments of this application.

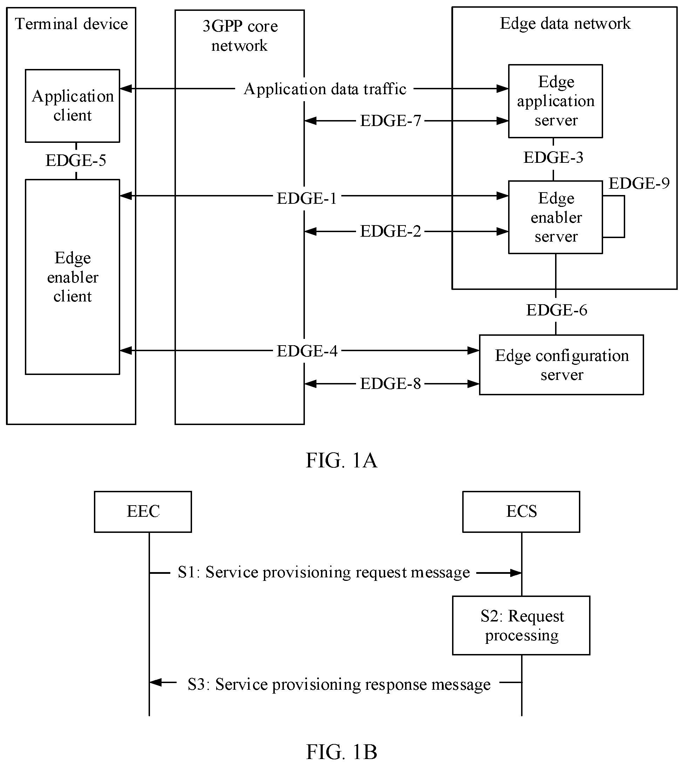

The following first describes, by using an example, a network architecture to which embodiments of this application are applicable. FIG. 1A is a diagram of a network architecture according to an embodiment of this application. As shown in FIG. 1A, for example, the network architecture is a multi-access edge computing (multi-access edge computing, MEC) application network. The network architecture may include but is not limited to a terminal device, a 3rd generation partnership project (3^{rd} generation partnership project, 3GPP) core network, an edge data network (edge data network, EDN), and an edge configuration server (edge configuration server, ECS). The terminal device may include one or more application clients (application client(s)) and an edge enabler client (edge enabler client, EEC). The terminal device may establish a connection to the edge data network by using the application client and/or the edge enabler client, to obtain an application service. The edge data network may include an edge application server (edge application server(s), EAS) and an edge enabler server (edge enabler server(s), EES).

The following briefly describes network elements shown in FIG. 1A.
1. A terminal device may be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.
   The terminal device may be a device that provides voice/data for a user, for example, a handheld device or a vehicle-mounted device with a wireless connection function. Currently, some examples of the terminal are: a mobile phone (mobile phone), a tablet computer, a notebook computer, a palmtop computer, a mobile Internet device (mobile Internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device, another processing device connected to a wireless modem, a wearable device, a terminal device in a 5G network, a terminal device in a future evolved public land mobile communication network (public land mobile network, PLMN), and the like. This is not limited in embodiments of this application.
2. An application client is a peer entity of an edge application on a terminal device side, and the application client is used by an application user (user) to obtain an application service from an application server. The application client is a client program of an application on the terminal device side. The application client may be connected to an application server on a cloud, to obtain application services, or may be connected to an EAS deployed and running in one or more EDNs, to obtain application services.
3. An edge enabler server (EES) may be deployed in an application instance in an EDN, to provide some enabler capabilities, and better support deployment of an application in MEC. The edge enabler server may support registration of an edge application, authentication and authorization of a terminal device, and provide information such as an IP address of an application instance for the terminal device. The edge enabler server may further obtain an identifier and the IP address of the application instance, and further send the identifier and the IP address of the application instance to an edge data network configuration server. In addition, the EES is deployed in the EDN. Usually, an EAS is registered with the EES, or information about an EAS is configured on the EES by using a management system. The EES is referred to as an EES on the EAS, or the EES controls/manages the EAS registered with/configured on the EES.
4. An edge enabler client (EEC) is configured to: register information about the EEC and information about the application client with the EES, perform security authentication and authorization, obtain an IP address of the EAS from the EES, and provide an edge computing enabler capability for the application client (for example, provide an EAS discovery service and return the IP address of the EAS to the application client). The EEC is a peer entity of the EES on the terminal device side.
5. An edge configuration server (ECS) may be responsible for configuring an EDN (for example, providing information about the EES for the terminal device), and may further directly provide information about the application instance for the terminal device, or exchange information with a domain name server (domain name server, DNS) of an application, to obtain the information about the application instance. Further, the edge configuration server may obtain the information about the application instance and the information about the IP address from another functional entity and store the information.
6. An edge application server (EAS) may also be referred to as an edge application, an application instance, an edge application instance, an MEC application (server), an EAS function, or the like. The EAS is an application deployed in the edge data network, and specifically refers to a server application program (for example, social media, augmented reality (augmented reality, AR), or virtual reality (virtual reality, VR)). One application may be used to deploy one or more EASs in one or more EDNs. EASs deployed and running in different EDNs may be considered as different EASs of the application, may share a domain name, and may use one IP address or different IP addresses.

The terminal device signs a service agreement with a provider of an application, to provide a service for the terminal device. The terminal device may log in to the application client on the terminal device, and connect to the EAS by using the application client for communication. The edge enabler client is a middleware layer, and is usually located in an operating system, or is located between the application client and the operating system. The application client may obtain an edge enabler service from the edge enabler client through an application programming interface (application programming interface, API).

As shown in FIG. 1A, application data traffic (application data traffic, ADT) is set between the application client and the edge application server, and communication interfaces are set between the application client and the edge enabler client, between the edge application server and the edge enabler server, between the edge enabler server and the edge configuration server, and the like.

In the network architecture shown in FIG. 1A, the application user signs a service agreement with an application provider, to provide a service for the application user. The application user logs in to the application client on a terminal, and performs communication through a connection between the application client and the EAS. The enabler client is a middle layer, and is usually located in an operating system, or is located between the application client and the operating system. The application client may obtain an edge enabler service from the enabler client through an application programming interface (application programming interface, API).

7. A 3GPP core network may include a session management function network element, a user plane function network element, a network exposure function network element, a unified data repository network element, a domain name system network element, and the like.

The session management function network element is mainly configured to: manage a session, allocate and manage an Internet protocol (Internet protocol, IP) address of the terminal device, select and manage a termination point of a user plane function and a policy control and charging function interface, notify downlink data, and the like. The session management function network element described in this application may be replaced with an SMF network element or an SMF. In a future communication system, the session management function network element may still be an SMF network element, or may have another name. This is not limited in this application.

A user plane function network element is used for packet routing and forwarding, quality of service (quality of service, QoS) processing of user plane data, and the like. The user plane function network element described in this application may be replaced with a UPF network element or a UPF. In a future communication system, the user plane network element may still be a UPF network element, or may have another name. This is not limited in this application.

The network exposure function network element is configured to maintain real-time information of all network functional entities and services in a network. The network exposure function network element described in this application may be replaced with an NEF network element or an NEF. In a future communication system, the network exposure function network element may still be an NEF network element, or may have another name. This is not limited in this application.

The unified data repository network element is configured to store subscription data, policy data, and the like. The unified data repository network element described in this application may be replaced with a UDR network element or a UDR. In a future communication system, the unified data repository network element may still be a UDR network element or have another name. This is not limited in this application.

The domain name system network element is a distributed database configured to implement mutual mapping between a domain name and an IP address. The domain name system network element described in this application may be replaced with a DNS network element or a DNS. In a future communication system, the domain name system network element may still be a DNS network element, or may have another name. This is not limited in this application.

Each of the foregoing network elements in the core network may also be referred to as a functional entity, and may be a network element implemented on dedicated hardware, or may be a software instance running on dedicated hardware, or an instance of a virtualization function on a proper platform. For example, the virtualization platform may be a cloud platform.

In embodiments of this application, the terminal device or the access network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (which is also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not specifically limited in embodiments of this application, provided that a program that records code of the method provided in embodiments of this application can be run to perform communication according to the method provided in embodiments of this application. For example, the method provided in embodiments of this application may be performed by the terminal device, the access network device, or a functional module that can invoke and execute the program and that is in the terminal device or the access network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD), or a digital versatile disc (digital versatile disc, DVD)), a smart card and a flash memory component (for example, erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a radio channel, and various other media that can store, contain and/or carry instructions and/or data.

In the SA6 standard, an ESS platform discovery procedure and an EAS discovery procedure are defined. A two-level discovery mechanism is designed in terms of an architecture and a function: The EEC on the terminal device side first discovers an EES platform, and then discovers an EAS from the EES platform.

To perform the EAS discovery procedure, an EES needs to be determined first. The EES is determined through an EES discovery procedure. The EES discovery procedure applicable to embodiments of this application is first described. Before performing the EES discovery procedure, an ECS configures related available edge computing service information for an EEC based on information such as a location, a service requirement, a service preference, and connectivity of a terminal device, so that the EEC discovers a related available EES. FIG. 1B is a diagram of an EES discovery procedure according to an embodiment of this application. As shown in FIG. 1B, the EES discovery procedure may include the following steps.

S1: The EEC sends a service provisioning request (service provisioning request) message to the ECS, where the service provisioning request message is used to request the ECS to trigger EES discovery, and the service provisioning request message includes an identifier of a terminal device, for example, a GPSI, connection information, a location of the terminal device, and AC profile (profile) information.

Specifically, information that may be included in the service provisioning request message is shown in Table 1.

**Table 1 Information included in a service provisioning request message**

| Information element | Status | Description |
|---|---|---|
| EEC ID | Mandatory | Unique identifier of an EEC |
| Security credential | Mandatory | Security credential resulting from successful authorization for an edge computing service |
| AC profile | Optional | Service information that the EEC expects to connect to |
| UE identifier | Optional | Identifier (for example, a GPSI or an identity token) of UE |
| Connection information | Optional | Connection information list of the UE, for example, a PLMN ID and a service set identifier (service set identifier, SSID) |
| UE location | Optional | Location information of the UE |

S2: The ECS processes a request. After receiving the request information, the ECS performs authentication and authorization.

S3: The ECS sends a service provisioning response message to the EEC. In some embodiments, the ECS matches, based on the AC profile and location information of the terminal device that are provided by the EEC, an EES registered with the ECS. If the ECS cannot determine information about the EES based on the request message of the EEC and the like, the ECS rejects a service provisioning request, and provides a failure cause. In some embodiments, the ECS successfully processes the service request, and the ECS sends the service provisioning response message to the EEC, and provides EDN connection information, a list of EESs that meet the request information of the EEC, address identification information of the EESs, and the like. In some embodiments, information included in the service provisioning response message is shown in Table 2.

**Table 2 Information included in a service provisioning response message**

| Information element | Status | Description |
|---|---|---|
| Successful response | Optional | Indicates that a service provisioning request succeeds |
| EDN configuration information list | Mandatory | EDN list |
| EDN connection information | Mandatory | Information needed by UE to establish a connection to an EDN |
| DNN/APN | Mandatory | Data network name/access point name (access point name) |
| S-NSSAI | Optional | Single network slice selection assistance information (single network slice selection assistance information) |
| EDN topological service area | Optional | List of cell identifiers or list of tracking area identities (tracking area identity, TAI), where the EDN serves UE that accesses a core network from these cells |
| List of EESs | Mandatory | EES list of the EDN |
| EESID | Mandatory | Identifier of an EES |
| EES endpoint | Mandatory | Endpoint addresses (for example, a URI and an IP address) of the EES |
| EAS ID | Optional | ID of an EAS registered with the EES |
| ECSP information | Optional | Edge computing service provider information |
| EES topological service area | Optional | List of cell identifiers or list of TAIs served by the EES, where an EEC of UE connected to the core network from a cell that is not in the list shall not be served by the EES |
| EES geographical service area | Optional | Area served by the EES in a geographical value |
| EES DNAI List | Optional | DNAI related to the EES/EAS |
| Lifetime | Optional | Duration for which EDN configuration information is valid and supposed to be cached in an EEC |
| Failure response | Optional | Indicates that a service provisioning request fails |
| Cause | Optional | Indicates a cause of the service provisioning request failure |

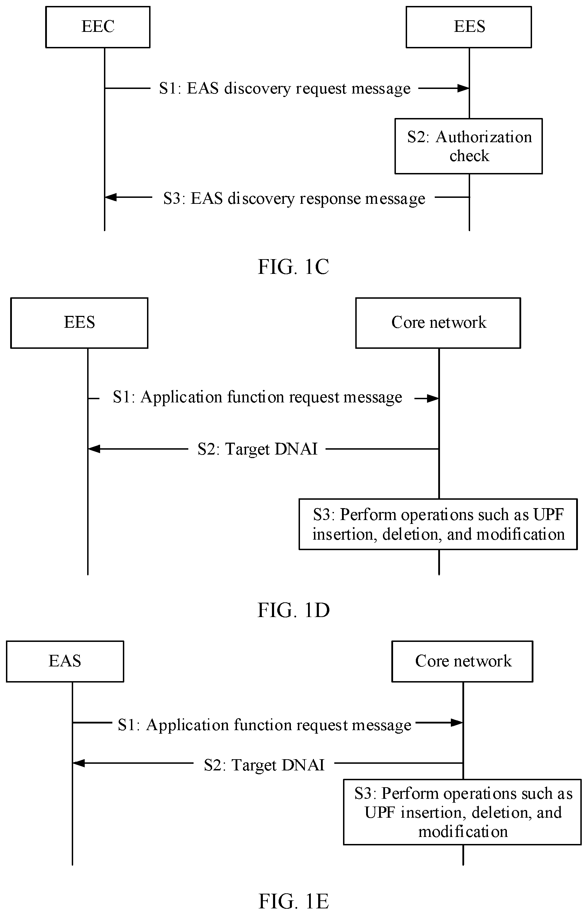

Then, the EAS discovery procedure applicable to embodiments of this application is described. The EAS discovery procedure is for determining one or more application servers that may provide an application service for an application client. After an EEC obtains uniform resource locating system (uniform resource locator, URL) information, IP information, or other information of an EES, and the EES is configured with an EAS discovery policy of an edge computing service provider (edge computing service provider, ESCP), EAS discovery may be performed. FIG. 1C is a diagram of an EAS discovery procedure according to an embodiment of this application. As shown in FIG. 1C, the EAS discovery procedure may include the following steps.

S1: The EEC sends an EAS discovery request message to the EES. The EAS discovery request message includes an EEC ID and a security credential, and may include an EAS discovery filter (discovery filter) parameter and information for retrieving a specific EAS or EASs of a specific type (for example, a game application).

Specifically, information that may be included in the EAS discovery request message is shown in Table 3.

**Table 3 Information included in an EAS discovery request message**

| Information element | Status | Description |
|---|---|---|
| Requester identifier | Mandatory | Identifier of a requester (for example, an EEC ID) |
| UE identifier | Optional | Identifier of UE (for example, a generic public subscription identifier (generic public subscription identifier, GPSI) or an identity token) |
| Security credential | Mandatory | Service information that the EEC expects to connect to |
| EAS discovery filter parameter | Optional | Identifier (for example, a GPSI or an identity token) of the UE |

S2: The EES performs authorization check. The EES checks whether the EEC is authorized to discover the requested EAS.

When the EES determines, through checking, that the EEC is authorized, the EES identifies the EAS based on the EAS discovery filter parameter and a location of the user equipment.

Information that may be included in the EAS discovery filter parameter is shown in Table 4.

**Table 4 Information included in an EAS discovery filter parameter**

| Information element | Status | Description |
|---|---|---|
| List of application client characteristics | Optional | Describes an AC for which a matching EAS is needed |
| AC profile | Mandatory | Indicates an AC profile including parameters for determining the matching EAS |
| List of EAS characteristics | Optional | Describes a characteristic of a required EAS |
| EAS ID | Optional | Identifier of the required EAS |
| EAS provider identifier | Optional | Identifier of a required EAS provider |
| EAS type | Optional | Category or type (for example, vehicle to everything) of the required EAS |
| EAS schedule | Optional | Required availability schedule (for example, a time window) of the EAS |
| EAS geographical service area | Optional | Location (for example, a geographical area and a route) in which an EAS service is available |
| EAS topological service area | Optional | Topological area (for example, a cell identifier and a TAI) for which the EAS service of the cell is available |
| Service continuity support | Optional | Indicates whether service connectivity support is required |
| EAS status | Optional | Status (for example, enabled or disabled) of the EAS |
| Service permission level | Optional | Required level of service permission |
| Service feature | Optional | Required service function, for example, a single-player or multi-player gaming service |

Information that may be included in the AC profile in the EAS discovery filter parameter is shown in Table 5.

**Table 5 Information included in an AC profile**

| Information element | Status | Description |
|---|---|---|
| AC identity | Mandatory | Identifier of an AC |
| Application client type | Optional | Category or type (for example, vehicle to everything) of the AC |
| Preferred ECSP list | Optional | When being used in a service provisioning request, the information element indicates, to an ECS, an ECSP that is preferred for the AC, and the ECS may use the information when selecting an EES |
| Application client schedule | Optional | Expected operation schedule (for example, a time window) of the AC |
| Expected application client geographic service area | Optional | An expected location of UE during AC operation schedule is deployed, where geographic information may indicate a geographic point, a polygon, a route, a signaling map, or a waypoint set |
| Service continuity support | Optional | Indicates whether service continuity support is required for an application |
| List of EASs | Optional | List of EASs that serve the AC along with a service key performance indicator (key performance indicator, KPI) required by the AC |
| EAS identity | Mandatory | Identifier of an EAS |
| Application client service KPI | Optional | KPI required by the AC to receive a service of the EAS |

In some embodiments, the EES does not obtain the EAS discovery filter parameter, and the EES identifies the EAS based on user equipment-specific service information at the EES and a location of a terminal device.

In some embodiments, the EES does not obtain the EAS discovery filter parameter, and the EES identifies the EAS by applying the ESCP policy (for example, based only on a location of a terminal device).

In some embodiments, the EES may select one or more EASs based on at least one of the following information: location information of the terminal device, terminal device-specific service information, an ECSP policy, and the EAS discovery filter parameter. The filter parameter may include one or more of the application client type, an application server type, and information about a latency requirement of the application client.

S3: The EES sends an EAS discovery response message to the EEC.

In some embodiments, the EES cannot determine information about the EAS based on an input in the EAS discovery request message, the terminal device-specific service information at the EES, or the ESCP policy. In this case, the EES rejects the service provisioning request, and provides a corresponding failure cause. For example, the terminal device is located outside the EAS geographical or topological service area. In some embodiments, the EES successfully processes the request, and the EAS discovery response message includes information about a discovered EAS and endpoint information of the EAS.

Information that may be included in an EAS discovery response message is shown in Table 6.

**Table 6 Information included in an EAS discovery response message**

| Information element | Status | Description |
|---|---|---|
| Successful response | Optional | Indicates that an EAS discovery request succeeds |
| Discovered EAS list | Optional | Indicates a list of discovered EASs |
| EAS profile | Mandatory | Profile of an EAS |
| Lifetime | Optional | Time interval or duration (for example, a time-to-live value for an EAS endpoint) during which an information element in the EAS profile is valid and shall be cached in an EEC |
| Failure response | Optional | Indicates that the EAS discovery request fails |
| Cause | Optional | Indicates a cause of an EAS discovery request failure |

The foregoing describes the EES discovery procedure and the EAS discovery procedure with reference to FIG. 1B and FIG. 1C. The following describes a method for triggering traffic influence (traffic influence) according to an embodiment of this application with reference to FIG. 1D and FIG. 1E.

FIG. 1D is a diagram of a method for triggering traffic influence according to an embodiment of this application. As shown in FIG. 1D, an EES sends an application function request message to a core network, to request to perform traffic influence. The core network may be an SMF, an NEF, an AF, or another network element. The following uses the core network as an example for description. The following steps may be included:
S1: The EES sends the application function request message to the core network.

The application function request message indicates the core network to perform traffic influence. Specifically, the EES directly requests the core network to perform traffic influence, for example, the EES requests the NEF/AF to perform traffic influence, and the NEF/AF requests the SMF to perform traffic influence for an application client, a terminal device, or an application server.

In some embodiments, the EES sends the application function request message to the core network for one time. The application function request message includes DNAI information of all EASs for which traffic influence needs to be performed, and the DNAI information of the EASs indicates a potential location of the application server.

In some other embodiments, the EES sends the application function request message to the core network for a plurality of times. The application function request message includes DNAI information of one or more EASs for which traffic influence needs to be performed, and the DNAI information of the EAS indicates a potential location of the application server.

In some embodiments, the application function request message may include information about one or more EASs, to request the core network to perform traffic influence for the one or more EASs. Optionally, the information about the one or more EASs is included in an EAS list.

In some embodiments, the application function request message includes information about a target EAS, to request the core network to perform traffic influence for the target EAS.

The target EAS is an EAS selected from one or more candidate EASs in an EAS discovery procedure, and the target EAS may also be referred to as a selected EAS. A process of selecting the target EAS from the candidate EASs may be performed by the EES, may be performed by an EEC, or may be performed by the application client. Optionally, the target EAS is determined by the application client. After selecting the target EAS, the application client sends the target EAS to the EEC. The EEC declares the received target EAS to the EES. Optionally, the target EAS is determined by the EEC. After selecting the target EAS, the EEC declares the target EAS to the EES.

The application function request message further includes one or more of the following information: a user equipment identity (UE identification, UE ID), EAS information (the EAS or the EAS list), information about a subscription type, and application function transaction identifier (application function transaction identifier) traffic influence, where the subscription type may be an early notification (early notification) or a late notification (late notification).

S2: The core network sends a target DNAI to the EES.

Specifically, by sending Nsmf_EventExposure_Notify, the core network may send one or more of the following information to the EES: the target DNAI, the application function transaction identifier, an identifier of the EAS, and the like. The target DNAI is a preferred DNAI for accessing the EAS.

By receiving the Nsmf_EventExposure_Notify message, the EES may determine that the target DNAI is a DNAI that is of the EES and that has optimized UE-EAS user plane information.

In some embodiments, the core network separately selects the target DNAI for the one or more EASs, and performs traffic influence for the target DNAI, so that there is an optimized user plane path between the terminal device and the target DNAI.

S3: The core network performs operations such as UPF insertion, deletion, and modification.

The core network (for example, an SMF in the core network) performs operations such as UPF insertion, deletion, and modification, that is, performs traffic influence, so that there may be an optimized user plane path between the terminal device and the target DNAI.

In some embodiments, there has been an optimized user plane path between the terminal device and the target DNAI, and the core network does not need to perform the operations such as the user plane network element insertion, deletion, or modification. In this case, the core network may not perform traffic influence. Optionally, the core network may first perform traffic influence for the target DNAI, and then send the target DNAI to the EES, that is, S3 may be performed before S2.

FIG. 1E is a diagram of another method for triggering traffic influence according to an embodiment of this application. As shown in FIG. 1E, a target EAS sends an application function request message to a core network, to request to perform traffic influence. The core network may be an SMF, an NEF, an AF, or another network element. The following uses the core network as an example for description. The following steps may be included.

S1: The EAS sends the application function request message to the core network.

The application function request message indicates the core network to perform traffic influence. Specifically, the EAS directly requests the core network to perform traffic influence, for example, the EAS requests the NEF/AF to perform traffic influence, and the NEF/AF requests the SMF to perform traffic influence for an application client, a terminal device, or an application server.

In some embodiments, the application function request message sent by the EAS may include one or more pieces of DNAI information for accessing the EAS, and the DNAI information of the EAS indicates a potential location of the application server.

In some other embodiments, the application function request message that is sent by the EAS and that is for the traffic influence may include one or more of the following information: a UE ID, EAS information, information about a subscription type, and an application function transaction identifier, where the subscription type may be an early notification or a late notification.

Optionally, when it is determined that the target EAS has a DNAI of an optimized user plane path, the target EAS does not need to send, to the SMF or the NEF, a message for requesting to perform traffic influence.

S2: The core network sends a target DNAI to the EAS.

By sending Nsmf_EventExposure_Notify, the core network may send one or more of the following information to the EES: the target DNAI, the application function transaction identifier, an identifier of the EAS, and the like. The target DNAI is a preferred DNAI for accessing the EAS.

In some embodiments, the core network performs traffic influence for the target DNAI, so that there is an optimized user plane path between the terminal device and the target DNAI. In some embodiments, the core network determines that the target DNAI has the optimized user plane path. In this case, traffic influence does not need to be performed for the target DNAI.

S3: The core network performs operations such as UPF insertion, deletion, and modification.

The core network (for example, the SMF in the core network) performs operations such as UPF insertion, deletion, and modification, that is, performs traffic influence, so that the target DNAI may be used to configure an optimized user plane path.

In some embodiments, there has been an optimized user plane path between the terminal device and the target DNAI, and the core network does not need to perform the operations such as the user plane network element insertion, deletion, or modification. In this case, the core network may not perform traffic influence. Optionally, the core network may first perform traffic influence for the target DNAI, and then send the target DNAI to the EES, that is, S3 may be performed before S2.

Currently, an EES, an EAS, and a UPF are deployed and selected at a granularity of a DNAI. However, one DNAI may correspond to a plurality of UPFs and a plurality of EESs/EASs. In this case, the SMF select the UPF based on DNAI information, and the ECS selects the EES for the terminal device based on the DNAI information. Consequently, when the DNAI corresponds to the plurality of UPFs and the plurality of EESs, the UPF selected by the SMF and the EES selected by the ECS are not co-located, and a latency between the current EES and the UPF cannot be ensured. Alternatively, the SMF selects the UPF for the terminal device based on the DNAI information, and the ECS selects the EAS based on the DNAI information. Consequently, when the DNAI corresponds to the plurality of UPFs and the plurality of EASs, the UPF selected by the SMF and the EAS selected by the ECS are not co-located, and a latency between the current EAS and the UPF cannot be ensured.

This application provides a communication method. The following separately describes the communication method by using the following embodiments. In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

The following describes the communication method provided in embodiments of this application. In embodiments, the method may be described by using an example in which a terminal device and a core network device are used as execution bodies for interaction. The core network device may include a 5GC, an ECS, an EES, and an EAS. The terminal device includes one or more ACs or EECs. An action performed by the terminal device in the following embodiments may also be understood as an action performed by the AC or the EEC in the terminal device. The terminal device, the AC, and the EEC may be replaced with each other. The following uses the terminal device as an example for description. In addition, the execution bodies for interaction are not limited in this application. For example, the terminal device may alternatively be a chip, a chip system, or a processor that supports the terminal device in implementing the method, or may be a logical module or software that can implement all or some functions of the terminal device, and the core network device may alternatively be a chip, a chip system, or a processor that supports the core network device in implementing the method, or may be a logical module or software that can implement all or some functions of the core network device.

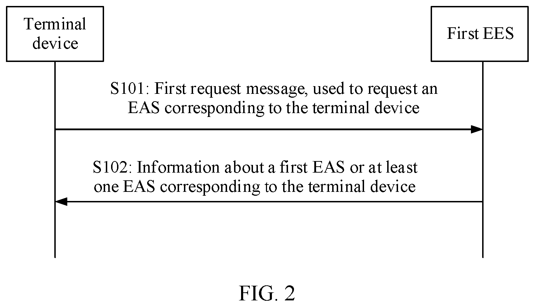

FIG. 2 is an interaction diagram of a communication method according to an embodiment of this application. As shown in FIG. 2, the communication method may include at least the following steps.

S101: The terminal device sends a first request message to a first EES, where the first request message is used to request an EAS corresponding to the terminal device. Correspondingly, the first EES receives the first request message from the terminal device.

The terminal device may send the first request message to the first EES. For example, the first request message may be an EAS discovery request, and the EAS discovery request may include information about the terminal device.

The information about the terminal device may include an identifier of the terminal device, for example, a GPSI, an EEC ID, connection information, AC profile (AC profile) information, an ID of the terminal device, and location (location) information of the terminal device. Optionally, the first request message may further carry one or more of other information (for example, the ID of the terminal device) of the terminal device, a security credential, EAS requirement information/application information (for example, an EAS discovery filter for determining a set of features of a required EAS), terminal device service continuity support, the location information (for example, a cell identity (cell identity), a tracking area identity (tracking area identity), and GPS coordinates or civic addresses (GPS coordinates or civic addresses)) of the terminal device, information for retrieving a specific EAS or EASs of a specific type (for example, a game application), and the like. For details, refer to table 8.2.2-1 in the 23.558 standard.

For the first request message, refer to the descriptions of the EAS discovery request message in FIG. 1C. For information included in the first request message, refer to Table 3. For the EAS requirement information/application information included in the first request message, refer to Table 4. For information included in the AC profile, refer to Table 5.

S102: The first EES sends, to the terminal device, information about a first EAS or at least one EAS corresponding to the terminal device. Correspondingly, the terminal device receives the information about the first EAS or the at least one EAS from the first EES.

In a first possible implementation, the first EES receives the first request message from the terminal device, and may determine the first EAS. For example, the first EES may determine the first EAS based on a UPF corresponding to the at least one EAS, and then send the information about the first EAS to the terminal device.

In a second possible implementation, the first EES receives the first request message from the terminal device, and sends the information about the at least one EAS to the terminal device.

In this embodiment, the terminal device may obtain the first EAS (the first EAS may also be understood as a target EAS of the terminal device) from the first EES via the first request message. Specifically, after receiving the first request message, the first EES may determine the first EAS based on UPF information corresponding to the at least one EAS, and then send the first EAS to the terminal device. Alternatively, the terminal device obtains the information about the at least one EAS from the first EES via the first request message, and determines the first EAS based on UPF information corresponding to the at least one EAS. An EES, an EAS, and a UPF are deployed and selected at a granularity of a DNAI. However, one DNAI may correspond to a plurality of UPFs and a plurality of EESs/EASs. Consequently, a latency between the current EES/EAS and the UPF cannot be ensured. A difference between the conventional technology and the solutions provided in this application lies in that the first EES or the terminal device may select, based on a correspondence between an EAS and a UPF, the first EAS that matches the terminal device. Therefore, the UPF and the first EAS that correspond to the terminal device are co-located, for example, deployed in a same equipment room/data center; or the first EAS is closest to the UPF corresponding to the terminal device, to ensure a shortest N6 latency. This can further reduce a latency.

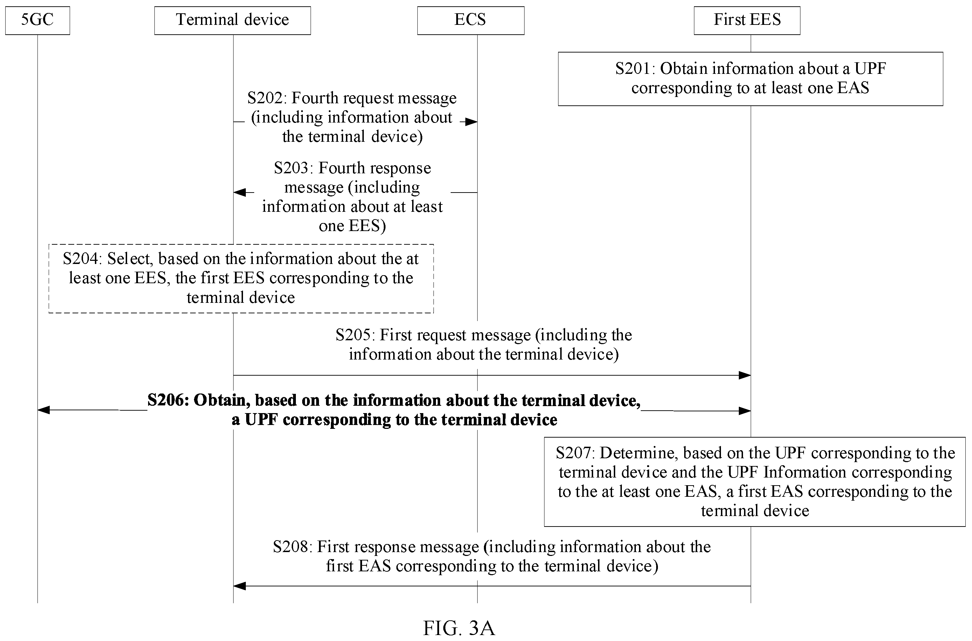

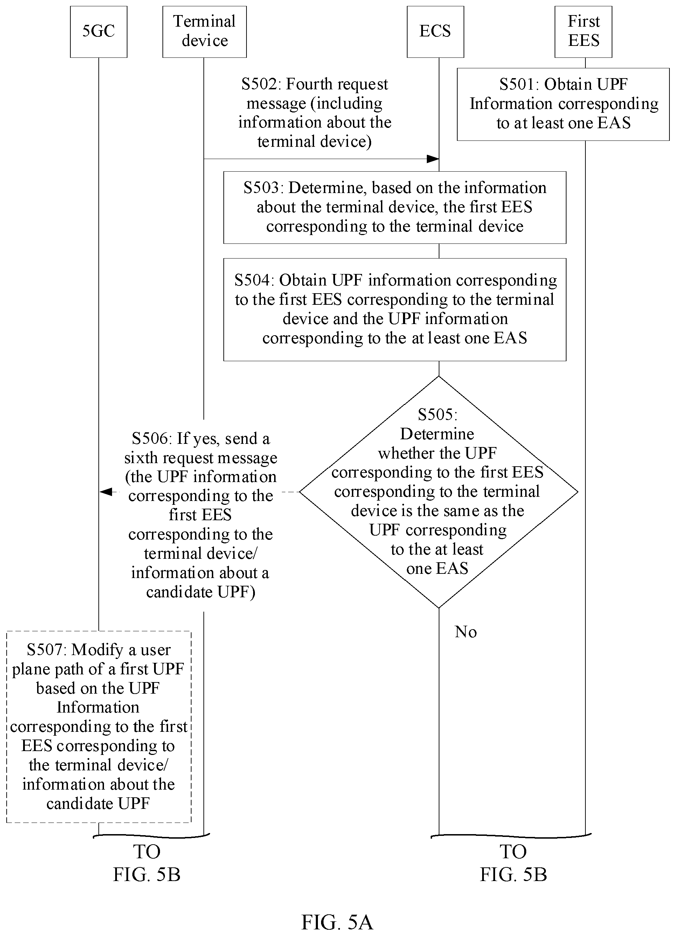

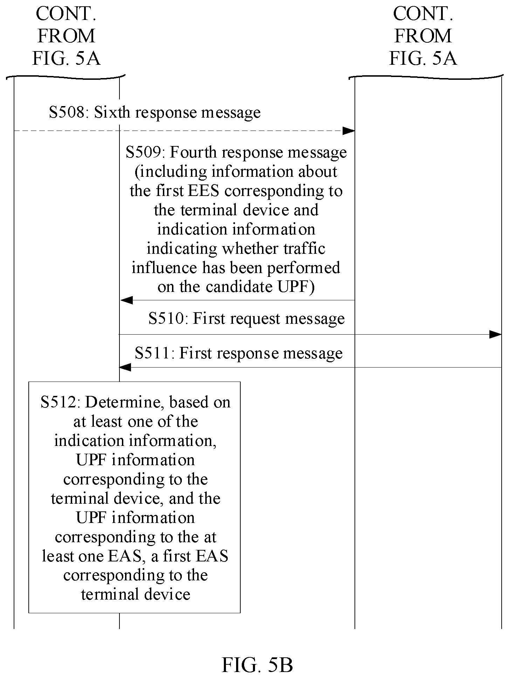

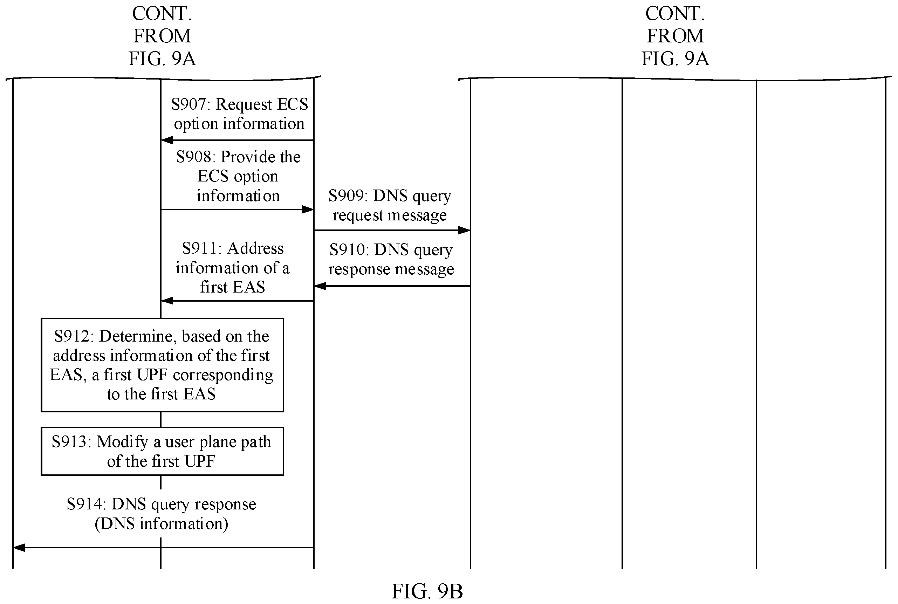

For some specific implementations and beneficial effect of the method embodiment shown in FIG. 2, refer to the following descriptions in FIG. 3A to FIG. 9A and FIG. 9B. In other words, embodiments shown in FIG. 3A to FIG. 9A and FIG. 9B are specific implementations of the embodiment shown in FIG. 2. To avoid redundancy, details are not described in the embodiment in FIG. 2. The method embodiments in FIG. 3A, FIG. 3B, FIG. 4A and FIG. 4B, and FIG. 6 may correspond to the first possible implementation in step S102. The method embodiment in FIG. 5A and FIG. 5B may correspond to the second possible implementation in step S102.

The following describes a communication method provided in embodiments of this application. FIG. 3A is an interaction diagram of a communication method according to an embodiment of this application. In the method, it may be assumed that UPF information corresponding to an EAS is configured in an EAS profile, and when a terminal device is connected to a first EES, a 5GC inserts a local UPF (local UPF) for the terminal device based on a location of the terminal device. As shown in FIG. 3A, the communication method may include at least the following steps. Step S204 is an optional step.

S201: The first EES obtains UPF information corresponding to at least one EAS.

In a possible implementation, the first EES receives a second request message from the at least one EAS. For example, the second request message may be an EAS registration request, the request may carry an EAS profile, and the EAS profile may include information about the EAS and UPF information corresponding to the EAS.

The information about the EAS may be EAS ID/EAS endpoint (EAS endpoint) information/EAS address information (which may include a URI, an FQDN, and an IP address) and DNAI information corresponding to the EAS. A UPF corresponding to the EAS may be understood as that there is a correspondence between the EAS and the UPF. The UPF may be a UPF connected to the EAS, a UPF preferentially selected by the EAS, a UPF that is co-located with the EAS in a same equipment room/data center, or a UPF closest to the EAS. The UPF information may be a UPF ID, may be a unique UPF identifier, in a network, allocated by a network management system, or may be address information of the UPF, or may be information that uniquely identifies an address, for example, a URI, an FQDN, or an IP address (IP address) of the UPF. This is not limited in this embodiment of this application. After receiving the EAS registration request from the EAS, the EES may perform authorization check on the EAS registration request, to check whether the EAS is authorized to register with the EES. After the authorization check succeeds, the EES may store the EAS profile and return an EAS registration response to the EAS.

In another possible implementation, the EES may obtain, in a preconfiguration manner, the UPF information corresponding to the at least one EAS, or configure, by using the network management system, the UPF information corresponding to the at least one EAS. For example, the network management system configures the EAS profile or EAS-related information for the EES, and the EAS profile or the EAS-related information includes the UPF information corresponding to the EAS.

S202: The terminal device sends a fourth request message to an ECS, where the fourth request message includes information about the terminal device. Correspondingly, the ECS receives the fourth request message from the terminal device.

Before performing an EES discovery procedure, the ECS configures related available edge computing service information for an EEC based on information such as the location, a service requirement, a service preference, and connectivity of the terminal device, so that the EEC discovers a related available EES.

The terminal device may send the fourth request message to the ECS. For example, the fourth request message may be an EES discovery request or a service provisioning request (service provisioning request). The EES discovery request is used to request the ECS to trigger EES discovery. For details of the fourth request message, refer to related descriptions of the service provisioning request message in S1 in FIG. 1B. The EES discovery request may include the information about the terminal device. For details of the information about the terminal device, refer to the descriptions of S101. For information included in the fourth request message, refer to the descriptions of Table 1. Details are not described herein again.

S203: The ECS sends a fourth response message to the terminal device, where the fourth response message includes information about at least one EES. Correspondingly, the terminal device receives the fourth response message from the ECS.

After receiving the fourth request message from the terminal device, the ECS may perform authorization check, to check whether the terminal device is authorized to perform the operation. The ECS may use a capability of a 3GPP core network (for example, querying the location of the terminal device) and obtain a location of an area served by the EES, and may determine, based on the location information of the terminal device and the location of the area served by the EES, the at least one EES corresponding to the terminal device.

After determining the at least one EES corresponding to the terminal device, the ECS may send the fourth response message to the terminal device. The fourth response message is in response to the fourth request message. For example, the fourth response message may be an EES discovery response or a service provisioning response message. For details of the fourth response message, refer to related descriptions of the service provisioning response message in S3 in FIG. 1B.

The fourth response message includes the information about the at least one EES. In some embodiments, the ECS matches, based on an AC profile and the location information of the terminal device that are provided by the terminal device, an EES registered with the ECS. If the ECS cannot determine the information about the EES based on the request message of the terminal device and the like, the ECS rejects a service provisioning request, and provides a failure cause. In some embodiments, the ECS successfully processes the service request, and the ECS sends the service provisioning response message to the terminal device, and provides EDN connection information, a list of EESs that meet the request information of the terminal device, address identification information of the EESs, and the like.

Optionally, the fourth response message may further include information indicating success or failure, and EDN configuration information (EDN configuration info). The EDN configuration information may include an ID of a discovered EES, address information of the EES, an EAS ID corresponding to the EES, and DNAI information corresponding to the EES (there may be one or more DNAIs).

It may be understood that for information included in the fourth response message, refer to the descriptions of Table 2. Details are not described herein again.

S204: The terminal device selects, based on the information about the at least one EES, the first EES corresponding to the terminal device.

After receiving the fourth response message from the ECS, the terminal device selects, based on the information about the at least one EES in the fourth response message, the first EES corresponding to the terminal device. If there is only one EES in the fourth response message, step S204 may be an optional step, and the terminal device does not need to select, but may directly determine the EES in the fourth response message as the first EES corresponding to the terminal device. If there are a plurality of ESSs in the fourth response message, the terminal device may select, based on information about the plurality of EESs, one EES as the first EES corresponding to the terminal device.

S205: The terminal device sends a first request message to the first EES, where the first request message includes the information about the terminal device. Correspondingly, the first EES receives the first request message from the terminal device.

It may be understood that S205 corresponds to S101. For related descriptions of S205, refer to the descriptions of S101. Details are not described herein again.

S206: The first EES obtains, from the 5GC based on the information about the terminal device, a UPF corresponding to the terminal device.

After the first EES receives the first request message from the terminal device, the first EES determines, through checking, that the EEC is authorized, and the first EES identifies the EAS based on an EAS discovery filter parameter and a location of user equipment. In some embodiments, the first EES does not obtain the EAS discovery filter parameter, and the first EES identifies the EAS based on user equipment-specific service information at the first EES and the location of the terminal device. In some embodiments, the first EES does not obtain the EAS discovery filter parameter, and the first EES identifies the EAS by applying an ESCP policy (for example, based only on the location of the terminal device). In some embodiments, the first EES may select the at least one EAS based on at least one of the following information: the location information of the terminal device, terminal device-specific service information, the ECSP policy, and the EAS discovery filter parameter. The filter parameter may include one or more of the application client type, an application server type, and information about a latency requirement of the application client.

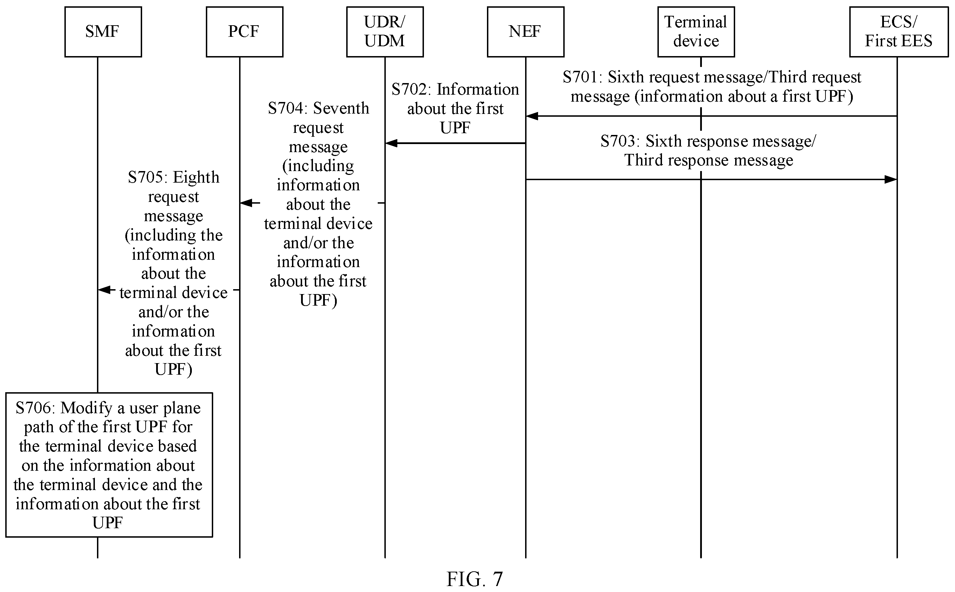

The first EES may send a request message to the 5GC, to request the UPF corresponding to the terminal device. For example, the EES may send, to the 5GC, an AF request message or a request message for obtaining the corresponding UPF (obtain serving UPF). For a specific implementation, refer to the following related descriptions about cases in which the ECS/first EES requests the 5GC to modify a user plane path of a first UPF and the 5GC modifies the user plane path of the first UPF in FIG. 7 to FIG. 9A and FIG. 9B. Details are not described herein. The UPF corresponding to the terminal device may be understood as a UPF currently connected to the terminal device. In a possible implementation, the first EES may send a request message to an NEF, and the NEF obtains, based on the request message, UPF information corresponding to the terminal device from an SMF. The SMF may send, to the NEF, the UPF information corresponding to the terminal device. Further, the NEF sends, to the first EES, the UPF information corresponding to the terminal device. The information about the current UPF of the terminal device may include the ID of the terminal device and the UPF information currently connected to or corresponding to the terminal device, for example, a UPF ID and UPF address information.

S207: The first EES determines, based on the UPF corresponding to the terminal device and the UPF information corresponding to the at least one EAS, a first EAS corresponding to the terminal device.

The first EES may determine, from the at least one EAS based on the UPF, obtained from the 5GC, corresponding to the terminal device and a correspondence between the at least one EAS and the UPF, the first EAS corresponding to the terminal device. Specifically, an EAS that is in the at least one EAS and that corresponds to a same UPF as the terminal device may be selected as the first EAA.

S208: The first EES sends a first response message to the terminal device, where the first response message includes information about the first EAS corresponding to the terminal device. Correspondingly, the terminal device receives the first response message from the EES.

After determining the first EAS corresponding to the terminal device, the first EES may send the first response message to the terminal device. For example, the first response message may be an EAS discovery response, and the response includes the information about the first EAS corresponding to the terminal device, for example, the discovered first EAS. The discovered first EAS may include endpoint information. Based on an EAS discovery filter received in the first request message, the response may include additional information related to a matching capability, for example, a service permission level, a key performance indicator (key performance indicator, KPI), an AC location that the EAS can support, and an application context relocation (application context relocation, ACR) scenario supported by the EAS. Optionally, in some embodiments, the first EES cannot determine the information about the EAS based on an input in the first request message, the terminal device-specific service information at the first EES, or the ESCP policy. In this case, the first EES rejects the service provisioning request, and provides a corresponding failure cause. For example, the terminal device is located outside a geographical or topological service area of the first EAS.

For the first response message, refer to the descriptions of the EAS discovery response message in FIG. 1C. For information included in the first response message, refer to Table 3.

In embodiments of this application, the first EES may select the matching first EAS based on the UPF currently corresponding to the terminal device and the correspondence between the at least one EAS and the UPF. Therefore, the UPF and the first EAS that correspond to the terminal device are co-located, for example, deployed in a same equipment room/data center; or the first EAS is closest to the UPF corresponding to the terminal device, to ensure a shortest N6 latency.

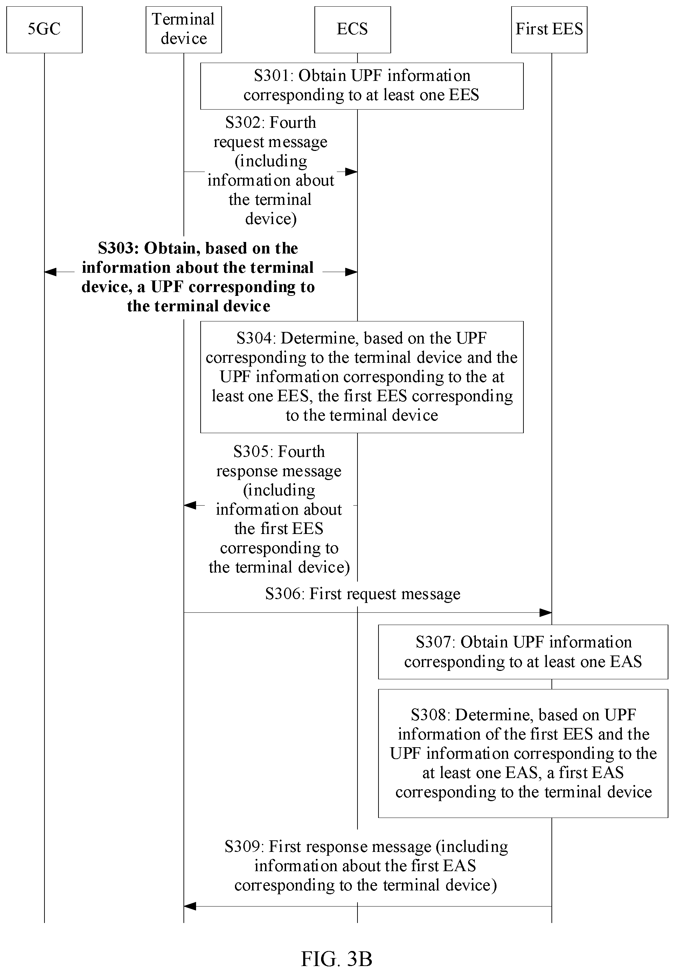

FIG. 3B is an interaction diagram of another communication method according to an embodiment of this application. In the method, it may be assumed that UPF information corresponding to an EES is configured in an EES profile, a UPF of a first EAS is the same as a UPF of a first EES, and when a terminal device is connected to the first EES, a 5GC inserts a local UPF (local UPF) for the terminal device based on a location of the terminal device. As shown in FIG. 3B, the communication method may include at least the following steps.

S301: An ECS obtains UPF information corresponding to at least one EES.

In a possible implementation, the ECS receives an EES registration request from the at least one EES, the EES registration request may carry an EES profile, and the EES profile may include information about the EES and the UPF information corresponding to the EES.

The information about the EES may be EES ID/EES endpoint (EES endpoint) information/EES address information (which may include a URI, an FQDN, and an IP address) and DNAI information corresponding to the EES. A UPF corresponding to the EES may be understood as that there is a correspondence between the EES and the UPF. The UPF may be a UPF connected to the EES, a UPF preferentially selected by the EES, a UPF that is co-located with the EES in a same equipment room/data center, or a UPF closest to the EES. The UPF information may be a UPF ID, may be a unique UPF identifier, in a network, allocated by a network management system, or may be address information of the UPF, or may be information that uniquely identifies an address, for example, a URI, an FQDN, or an IP address (IP address) of the UPF. This is not limited in this embodiment of this application. After receiving the EES registration request from the EES, the ECS may perform authorization check on the EES registration request, to check whether the EES is authorized to register with the ECS. After the authorization check succeeds, the ECS may store the EES profile and return an EES registration response to the EES.

In another possible implementation, the ECS may obtain, in a preconfiguration manner, the UPF information corresponding to the at least one EES, or configure, by using the network management system, the UPF corresponding to the at least one EES. For example, the network management system configures the EES profile or EES-related information for the ECS, and the EES profile or the EES-related information includes the UPF information corresponding to the EES.

S302: The terminal device sends a fourth request message to the ECS, where the fourth request message includes information about the terminal device. Correspondingly, the ECS receives the fourth request message from the terminal device.

It may be understood that S302 corresponds to S202. For related descriptions of S302, refer to the descriptions of S202. Details are not described herein again. Optionally, the request may further carry one or more of other information (for example, the ID of the terminal device) of the terminal device, a security credential, EAS requirement information/application information (for example, an EES discovery filter for determining a set of features of a required EAS), terminal device service continuity support, the location information (for example, a cell identity (cell identity), a tracking area identity (tracking area identity), and GPS coordinates or civic addresses (GPS coordinates or civic addresses)) of the terminal device, information for retrieving a specific EES or EESs of a specific type, and the like.

S303: The ECS obtains, from the 5GC based on the information about the terminal device, a UPF corresponding to the terminal device.

After receiving the fourth request message from the terminal device, the ECS may check whether the terminal device is authorized to discover a requested EES. The authorization check is applicable to a single EES, EESs of a specific type, or all EESs. If the location information of the terminal device is not available, the ECS obtains the location of the terminal device by using a capability of a 3GPP core network. If the EES discovery filter is provided by the terminal device but does not include an application group profile, the ECS identifies the EES based on the provided EES discovery filter and the location of the terminal device.

The ECS may send a request message to the 5GC, to request the UPF corresponding to the terminal device. For example, the ECS may send, to the 5GC, an AF request message or a request message for obtaining the corresponding UPF (obtain serving UPF). For a specific implementation, refer to the following related descriptions about cases in which the ECS/first EES requests the 5GC to modify a user plane path of a first UPF and the 5GC modifies the user plane path of the first UPF in FIG. 7 to FIG. 9A and FIG. 9B. Details are not described herein.

In a possible implementation, the ECS may send a request message to an NEF, and the NEF obtains, based on the request message, UPF information corresponding to the terminal device from an SMF. The SMF may send, to the NEF, the UPF information corresponding to the terminal device. Further, the NEF sends, to the ECS, the UPF information corresponding to the terminal device. The information about the current UPF of the terminal device may include the ID of the terminal device and the UPF information currently connected to or corresponding to the terminal device, for example, a UPF ID and UPF address information.

S304: The ECS determines, based on the UPF corresponding to the terminal device and the UPF information corresponding to the at least one EES, a first EES corresponding to the terminal device.

The ECS determines, based on the UPF, obtained from the 5GC, corresponding to the terminal device and the information about UPF obtained from the at least one EES that corresponds to the at least one EES, the first EES corresponding to the terminal device. Specifically, an EES that is in the at least one EES and that corresponds to a same UPF as the terminal device may be selected as the first EES.

S305: The ECS sends a fourth response message to the terminal device, where the fourth response message includes information about the first EES corresponding to the terminal device. Correspondingly, the terminal device receives the fourth response message from the ECS.

S306: The terminal device sends a first request message to the first EES. Correspondingly, the first EES receives the first request message from the terminal device.

The terminal device may send the first request message to the first EES. Optionally, the first request message may include the information about the terminal device. It may be understood that for related descriptions of the first request message and the information about the terminal device, refer to the descriptions of S101. Details are not described herein again.

S307: The first EES obtains UPF information corresponding to at least one EAS.

It may be understood that S307 corresponds to S201. For related descriptions of S307, refer to the descriptions of S201. Details are not described herein again. In addition, S307 may be performed before or after S301. This is not specifically limited.

S308: The first EES determines, based on UPF information of the first EES and the UPF information corresponding to the at least one EAS, a first EAS corresponding to the terminal device.

After the EES obtains the UPF information corresponding to the at least one EAS, it is assumed that the UPF corresponding to the first EES corresponding to the terminal device is the same as the UPF corresponding to the first EAS corresponding to the terminal device. Therefore, the first EAS corresponding to the terminal device may be determined from the at least one EAS based on the UPF information of the first EES corresponding to the terminal device and the UPF corresponding to the at least one EAS.

S309: The first EES sends a first response message to the terminal device, where the first response message includes information about the first EAS corresponding to the terminal device. Correspondingly, the terminal device receives the first response message from the EES.

It may be understood that S308 corresponds to S208. For related descriptions of S308, refer to the descriptions of S208. Details are not described herein again.

Optionally, after S307, in a possible implementation parallel to S308 and S309, the first EES may send, to the terminal device, the information about the at least one EAS and the UPF information corresponding to the at least one EAS, and the terminal device may select the first EAS based on at least one of the following information: the UPF corresponding to the terminal device, the UPF information corresponding to the first EES, and the UPF information corresponding to the at least one EAS. For example, the terminal device may select, as the first EAS, an EAS that is in the at least one EAS and that corresponds to a same UPF as the first EES and the terminal device.

In embodiments of this application, the ECS may select the matching ECS based on the UPF currently corresponding to the terminal device and the correspondence between the ECS and the UPF. The first EES and the first EAS correspond to the same UPF. Therefore, the UPF and the first EES/first EAS that correspond to the terminal device are co-located, for example, deployed in a same equipment room/data center; or the first EES/first EAS is closest to the UPF connected to the terminal device, to ensure a shortest N6 latency. The first EES ensures that the first EAS/first EES and the UPF are co-located, to reduce implementation logic of determining the first EAS between the first EES and the first EAS based on the corresponding UPF. Therefore, a latency can be reduced.

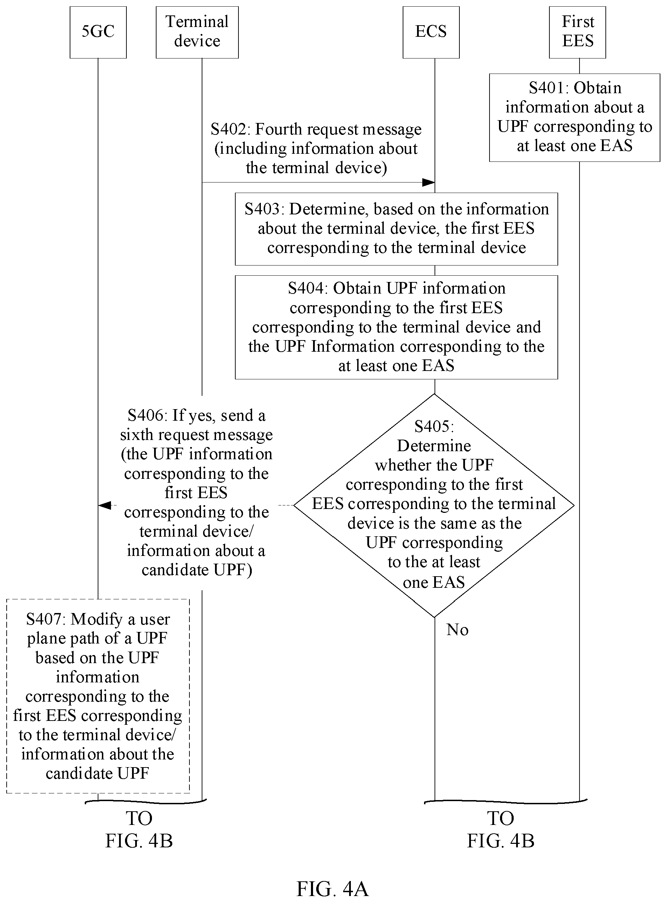

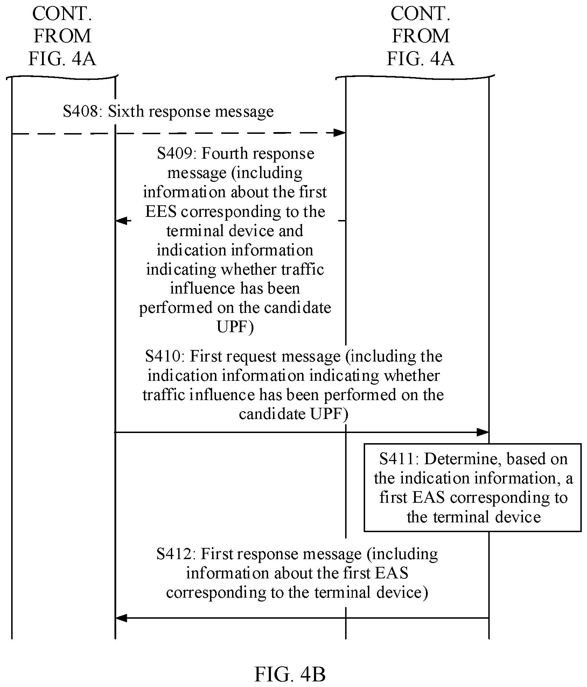

FIG. 4A and FIG. 4B are an interaction diagram of the still another communication method according to an embodiment of this application. The method may be described by using an example in which a terminal device and a core network device are used as execution bodies for interaction. The core network device may include a 5GC, an ECS, and an EES. In addition, the execution bodies for interaction are not limited in this application. For example, the terminal device may alternatively be a chip, a chip system, or a processor that supports the terminal device in implementing the method, or may be a logical module or software that can implement all or some functions of the terminal device, and the core network device may alternatively be a chip, a chip system, or a processor that supports the core network device in implementing the method, or may be a logical module or software that can implement all or some functions of the core network device. As shown in FIG. 4A and FIG. 4B, the communication method may include at least the following steps. Step S405 to step S407 are optional steps.

S401: A first EES obtains UPF information corresponding to at least one EAS.

It may be understood that for related descriptions of S401, refer to the descriptions of S201. Details are not described herein again.

S402: The terminal device sends a fourth request message to the ECS, where the fourth request message includes information about the terminal device. Correspondingly, the ECS receives the fourth request message from the terminal device.

It may be understood that S402 corresponds to S202. For related descriptions of S402, refer to the descriptions of S202. Details are not described herein again.

S403: The ECS determines, based on the information about the terminal device, a first EES corresponding to the terminal device.

After receiving the fourth request message from the terminal device, the ECS may perform authorization check, to check whether the terminal device is authorized to perform the operation. The ECS may use a capability of a 3GPP core network (for example, querying a location of the terminal device) and obtain a location of an area served by at least one EES, and may determine, from the at least one EES based on location information of the terminal device and the location of the area served by the at least one EES, the first EES corresponding to the terminal device.

S404: The ECS obtains UPF information corresponding to the first EES corresponding to the terminal device and the UPF information corresponding to the at least one EAS.

The ECS obtains the UPF information corresponding to the first EES corresponding to the terminal device. In a possible implementation, the ECS receives an EES registration request of the first EES, and the request may include the UPF information corresponding to the first EES. In another possible implementation, the ECS may obtain, in a preconfiguration manner, the UPF information corresponding to the first EES, or configure, by using a network management system, the UPF corresponding to the first EES. For example, the network management system configures an EES profile or EES-related information for the ECS, and the EES profile or the EES-related information includes the UPF information corresponding to the first EES.

In a possible implementation in which the ECS obtains the UPF information corresponding to the at least one EAS, the first EES obtains the UPF information corresponding to the at least one EAS in S401, and the ECS receives the EES registration request from the first EES, where the EES registration request may carry the UPF information corresponding to the at least one EAS. In another possible implementation, the ECS may obtain, in a preconfiguration manner, the UPF information corresponding to the at least one EAS, or configure, by using the network management system, the UPF corresponding to the at least one EAS. For example, the network management system configures an EAS profile or EAS-related information, and the EAS profile or the EAS-related information includes the UPF information corresponding to the EAS.

S405: The ECS determines whether a UPF corresponding to the first EES corresponding to the terminal device is the same as a UPF corresponding to the at least one EAS; and if the UPF corresponding to the first EES corresponding to the terminal device is the same as the UPF corresponding to the at least one EAS, performs step S406; or if the UPF corresponding to the first EES corresponding to the terminal device is not the same as the UPF corresponding to the at least one EAS, performs step S409 (in this case, S406 to S408 are optional steps).

The ECS may determine whether the UPF corresponding to the first EES corresponding to the terminal device is the same as the UPF corresponding to the at least one EAS. The UPF corresponding to the first EES may be the same as one or more UPFs corresponding to the at least one EAS.

Determining whether the UPF corresponding to the first EES corresponding to the terminal device is the same as the UPF corresponding to the at least one EAS may alternatively be determining whether there is an intersection between the UPF corresponding to the first EES and the UPF corresponding to the at least one EAS. The UPF corresponding to the first EES is the same as UPFs, corresponding to one or more EASs, that have an intersection with the UPF corresponding to the first EES. These EASs may also be referred to as candidate EASs, and the corresponding UPFs may be referred to as candidate UPFs.

S406: The ECS sends a sixth request message to the 5GC, where the sixth request message includes UPF information corresponding to the first EES corresponding to the terminal device/information about the candidate UPF. Correspondingly, the 5GC receives the sixth request message from the ECS.

If the ECS determines that the UPF corresponding to the first EES is the same as the UPF corresponding to a first EAS, the ECS may send the sixth request message to the 5GC. For example, the sixth request message may be a second user plane path modification request, the user plane path modification request includes the UPF information corresponding to the first EES corresponding to the terminal device/information about the candidate UPF, and the candidate UPF is a UPF that corresponds to the one or more EASs, in the at least one EAS, corresponding to the same UPF as the first EES.

S407: The 5GC modifies a user plane path of the UPF based on the UPF information corresponding to the first EES corresponding to the terminal device/information about the candidate UPF.

After receiving the sixth request message from the ECS, the 5GC may modify the user plane path of the UPF based on the UPF information corresponding to the first EES corresponding to the terminal device/information about the candidate UPF in the request. For modification of a user plane path of the candidate UPF, refer to related descriptions in FIG. 1D. In FIG. 1D, the core network performs operations such as UPF insertion, deletion, and modification between the terminal device and the target DNAI, that is, performs traffic influence. In this embodiment, different from FIG. 1D, the core network 5GC performs operations such as UPF insertion, deletion, and modification between the terminal device and the candidate EAS, that is, performs traffic influence. Traffic influence may be understood as adding a UPF path from the terminal device to the candidate EAS, or an optimized user plane path between the terminal device and the candidate EAS. Specifically, an SMF in the 5GC may modify the user plane path of the UPF based on the UPF information corresponding to the first EES corresponding to the terminal device/information about the candidate UPF.

S408: The 5GC sends a sixth response message to the ECS. Correspondingly, the ECS receives the sixth response message from the 5GC.

After modifying the user plane path of the UPF based on the UPF information of the first EES/information about the candidate UPF, the 5GC may send the sixth response message to the ECS. For example, the SMF sends a user plane path management notification (UP path management notification) message (accept or not success or not) to an NEF, and the NEF sends the user plane path management notification message to the ECS.

For specific implementations of S406 to S408, refer to the following related descriptions about cases in which the ECS/first EES requests the 5GC to modify the user plane path of the UPF and the 5GC modifies the user plane path of the UPF in FIG. 7 to FIG. 9A and FIG. 9B. Details are not described herein.

S409: The ECS sends a fourth response message to the terminal device, where the fourth response message includes information about the first EES corresponding to the terminal device and indication information indicating whether traffic influence has been performed on the candidate UPF. Correspondingly, the terminal device receives the fourth response message from the ECS.

Traffic influence may be understood as that the EES triggers the 5GC to modify a user plane path of the candidate UPF based on the UPF information corresponding to the first EES corresponding to the terminal device/information about the candidate UPF.

After determining the first EES corresponding to the terminal device or receiving the sixth response message from the 5GC, the ECS may send the fourth response message to the terminal device. The fourth response message includes one or more of the information about the first EES corresponding to the terminal device, the UPF information corresponding to the first EES, and the indication information indicating whether traffic influence (traffic influence) has been performed on the candidate UPF. Optionally, that the fourth response message may further include the UPF information corresponding to the first EES may be understood as that the first EES may correspond to a plurality of UPFs, and the UPF information corresponding to the first EES is carried, to notify the terminal device of a specific UPF, in the plurality of UPFs, on which traffic influence is performed. Therefore, the terminal device may subsequently select a path of the UPF on which traffic influence is performed to communicate with the first EES.

S410: The terminal device sends a first request message to the first EES, where the first request message includes the indication information indicating whether traffic influence has been performed on the candidate UPF. Correspondingly, the first EES receives the first request message from the terminal device.

It may be understood that for related descriptions of the first request message, refer to the descriptions of S101. Details are not described herein again.

S411: The first EES determines, based on the indication information, a first EAS corresponding to the terminal device.

After receiving the first request message from the terminal device, the first EES may determine, based on the indication information, the first EAS corresponding to the terminal device.

In a possible implementation, if the indication information indicates that traffic influence has been performed on the candidate UPF, the first EES may determine that an EAS, in a candidate UPF, that corresponds to the same UPF as the first EES is the first EAS, so that the first EES does not need to perform additional traffic influence (that is, the first EES does not need to trigger the 5GC to modify the user plane path based on the candidate UPF). If the indication information indicates that the ECS does not perform traffic influence on the candidate UPF, the first EES is triggered to send a third request message to the 5GC. The third request message is used to request to modify the user plane path of the candidate UPF, and the third request message includes the information about the candidate UPF. The first EAS is determined based on the conventional technology from an EAS (candidate EAS) corresponding to the candidate UPF whose user plane path has been modified.

S412: The first EES sends a first response message to the terminal device, where the first response message includes information about the first EAS corresponding to the terminal device. Correspondingly, the terminal device receives the first response message from the EES.

It may be understood that S412 corresponds to S208. For related descriptions of S412, refer to the descriptions of S208. Details are not described herein again.

In embodiments of this application, the ECS may first determine the first EES, and then the ECS determines, based on the UPF information corresponding to the first EES and the UPF information corresponding to the at least one EAS, whether to trigger the network side to modify the user plane path of the UPF corresponding to the first EES. For example, if the UPF corresponding to the first EES is the same as the UPF corresponding to the one or more EASs in the at least one EAS (the UPF corresponding to the EAS that is the same as the UPF corresponding to the first EES may be referred to as a candidate UPF), the ECS may request the 5GC to perform traffic influence on the candidate UPF. If the UPF corresponding to the first EES is different from the UPF corresponding to the one or more EASs in the at least one EAS, the first EES may request the 5GC to perform traffic influence on the candidate UPF. In addition, the first EES determines the first EAS. Therefore, the UPF and the first EES/first EAS that correspond to the terminal device are co-located, for example, deployed in a same equipment room/data center; or the first EES/first EAS is closest to the UPF connected to the terminal device, to ensure a shortest N6 latency.

FIG. 5A and FIG. 5B are an interaction diagram of still another communication method according to an embodiment of this application. The method may be described by using an example in which a terminal device and a core network device are used as execution bodies for interaction. The core network device may include a 5GC, an ECS, and an EES. In addition, the execution bodies for interaction are not limited in this application. For example, the terminal device may alternatively be a chip, a chip system, or a processor that supports the terminal device in implementing the method, or may be a logical module or software that can implement all or some functions of the terminal device, and the core network device may alternatively be a chip, a chip system, or a processor that supports the core network device in implementing the method, or may be a logical module or software that can implement all or some functions of the core network device. As shown in FIG. 5A and FIG. 5B, the communication method may include at least the following steps. Step S505 to step S507 are optional steps.

S501: The first EES obtains UPF information corresponding to at least one EAS.

It may be understood that S501 corresponds to S401. For related descriptions of S501, refer to the descriptions of S401. Details are not described herein again.

S502: The terminal device sends a fourth request message to the ECS, where the fourth request message includes information about the terminal device. Correspondingly, the ECS receives the fourth request message from the terminal device.

It may be understood that S502 corresponds to S402. For related descriptions of S502, refer to the descriptions of S402. Details are not described herein again.

S503: The ECS determines, based on the information about the terminal device, a first EES corresponding to the terminal device.

It may be understood that S503 corresponds to S403. For related descriptions of S503, refer to the descriptions of S403. Details are not described herein again.

S504: The ECS obtains UPF information corresponding to the first EES corresponding to the terminal device and the UPF information corresponding to the at least one EAS.

It may be understood that S504 corresponds to S404. For related descriptions of S504, refer to the descriptions of S404. Details are not described herein again.

S505: The ECS determines whether a UPF corresponding to the first EES corresponding to the terminal device is the same as a UPF corresponding to the at least one EAS; and if yes, performs step S506; or if no, performs step S509 (in this case, S506 to S508 are optional steps).

It may be understood that S505 corresponds to S405. For related descriptions of S505, refer to the descriptions of S405. Details are not described herein again.

S506: The ECS sends a sixth request message to the 5GC, where the sixth request message includes UPF information corresponding to the first EES corresponding to the terminal device/information about a candidate UPF. Correspondingly, the 5GC receives the sixth request message from the ECS.

It may be understood that S506 corresponds to S406. For related descriptions of S506, refer to the descriptions of S406. Details are not described herein again.

S507: The 5GC modifies a user plane path of a first UPF based on the UPF information corresponding to the first EES corresponding to the terminal device/information about the candidate UPF.

It may be understood that S507 corresponds to S407. For related descriptions of S507, refer to the descriptions of S407. Details are not described herein again.

S508: The 5GC sends a sixth response message to the ECS. Correspondingly, the ECS receives the sixth response message from the 5GC.

It may be understood that S508 corresponds to S408. For related descriptions of S508, refer to the descriptions of S408. Details are not described herein again.

For specific implementations of S506 to S508, refer to the following related descriptions about cases in which the ECS/first EES requests the 5GC to modify a user plane path of a UPF and the 5GC modifies the user plane path of the UPF in FIG. 7 to FIG. 9A and FIG. 9B. Details are not described herein.

S509: The ECS sends a fourth response message to the terminal device, where the fourth response message includes information about the first EES corresponding to the terminal device and indication information indicating whether traffic influence has been performed on the candidate UPF. Correspondingly, the terminal device receives the fourth response message from the ECS.

It may be understood that S509 corresponds to S409. For related descriptions of S509, refer to the descriptions of S409. Details are not described herein again.

S510: The terminal device sends a first request message to the first EES.

Optionally, if the indication information indicates that the ECS has performed traffic influence on the candidate UPF, the request may further carry the information about the terminal device, to indicate that the terminal device performs traffic influence.

It may be understood that for related descriptions of the first request message, refer to the descriptions of S101. Details are not described herein again.

S511: The first EES sends a first response message to the terminal device. Correspondingly, the terminal device receives the first response message from the first EES.

The first response message includes the at least one EAS and/or information about a candidate UPF corresponding to the at least one EAS.

Optionally, if the indication information indicates that the ECS has performed traffic influence on the candidate UPF, the first response message includes information about the at least one EAS and/or information about a candidate EAS corresponding to the at least one EAS, for example, an EAS ID or EAS address information, and the information about the candidate UPF. It may be understood that the candidate EAS may correspond to a plurality of UPFs, and the information about the candidate UPF may be carried, to notify the terminal device of a specific UPF, in the plurality of UPFs, on which traffic influence is performed. Therefore, the terminal device may subsequently select a path of the UPF on which traffic influence is performed to communicate with the first EAS. S510 and S511 may be understood as that the terminal device requests the first EES to discover the first EAS.

S512: The terminal device determines, based on at least one of the indication information, UPF information corresponding to the terminal device, and UPF information corresponding to the at least one EAS, a first EAS corresponding to the terminal device.

After receiving the fourth response message, the terminal device may determine, based on at least one of the indication information, the UPF information corresponding to the terminal device, and the UPF information corresponding to the at least one EAS in the fourth response message, the first EAS corresponding to the terminal device. The UPF information corresponding to the at least one EAS includes the information about the candidate UPF.

In a possible implementation, if the indication information indicates that the ECS has performed traffic influence on the candidate UPF, the terminal device may determine that an EAS corresponding to the same UPF as the first EES is the first EAS, so that the first EES does not need to perform additional traffic influence (that is, the first EES does not need to trigger the 5GC to modify the user plane path based on the information about the candidate UPF). If the indication information indicates that the ECS does not perform traffic influence on the candidate UPF, the terminal device selects the first EAS from candidate EASs and triggers, based on information about the first UPF corresponding to the first EAS, the first EES to perform traffic influence on the first UPF. For example, a request message (for example, an EAS information provisioning request) may be sent to the first EES. The request message carries information about the first EAS selected by the terminal device and the information about the first UPF, and optionally, may further carry the indication information. After receiving the request message, the first EES performs traffic influence on the first UPF. The terminal device determines that an EAS corresponding to the first UPF whose user plane path is modified is the first EAS corresponding to the terminal device.

In another possible implementation, if the terminal device determines that the received candidate UPF is inconsistent with a UPF of the currently connected first EES, the terminal device may trigger the first EES to perform traffic influence on the candidate UPF, and determine that the candidate EAS corresponding to the candidate UPF whose user plane path is modified is the first EAS.

In embodiments of this application, the terminal device may select an appropriate first EAS, and trigger the first EES to perform traffic influence on the UPF corresponding to the first EAS. Therefore, the UPF and the first EES/first EAS that correspond to the terminal device are co-located, for example, deployed in a same equipment room/data center; or the first EES/first EAS is closest to the UPF connected to the terminal device, to ensure a shortest N6 latency. In embodiments of this application, the first EES does not need to perform unnecessary user plane path modification, to reduce signaling overheads.

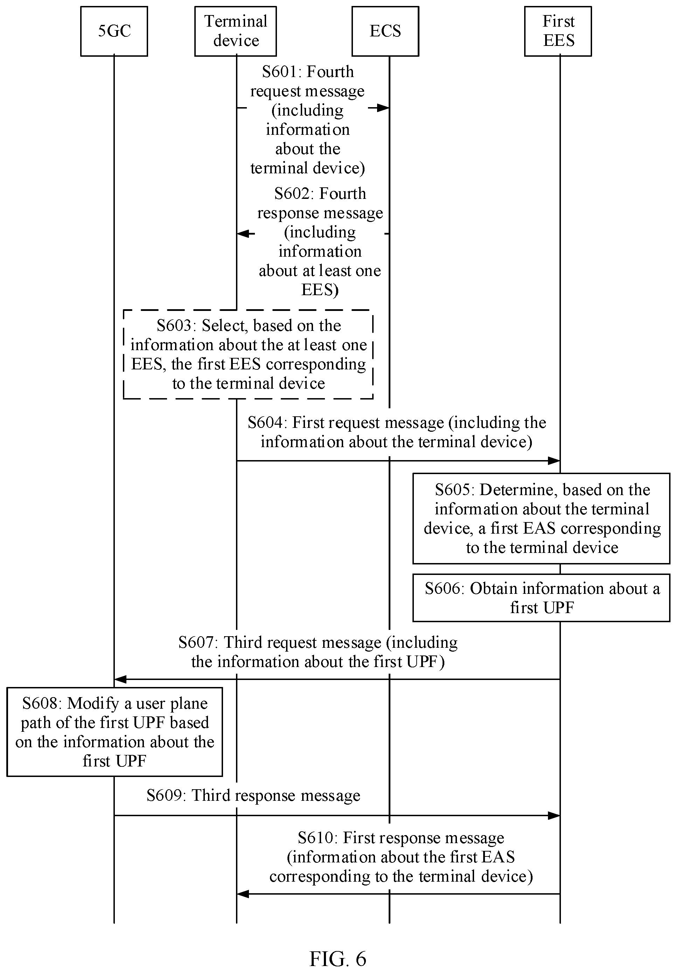

FIG. 6 is an interaction diagram of still another communication method according to an embodiment of this application. The method may be described by using an example in which a terminal device and a core network device are used as execution bodies for interaction. The core network device may include a 5GC, an ECS, and an EES. In addition, the execution bodies for interaction are not limited in this application. For example, the terminal device may alternatively be a chip, a chip system, or a processor that supports the terminal device in implementing the method, or may be a logical module or software that can implement all or some functions of the terminal device, and the core network device may alternatively be a chip, a chip system, or a processor that supports the core network device in implementing the method, or may be a logical module or software that can implement all or some functions of the core network device. As shown in FIG. 6, the communication method may include at least the following steps. S601 to S603 are optional steps.

S601: The terminal device sends a fourth request message to the ECS, where the fourth request message includes information about the terminal device. Correspondingly, the ECS receives the fourth request message from the terminal device.

It may be understood that S601 corresponds to S202. For related descriptions of S601, refer to the descriptions of S202. Details are not described herein again.

S602: The ECS sends a fourth response message to the terminal device, where the fourth response message includes information about at least one EES. Correspondingly, the terminal device receives the fourth response message from the ECS.

It may be understood that S602 corresponds to S203. For related descriptions of S602, refer to the descriptions of S203. Details are not described herein again.

S603: The terminal device selects, based on the information about the at least one EES, a first EES corresponding to the terminal device.

It may be understood that S603 corresponds to S204. For related descriptions of S603, refer to the descriptions of S204. Details are not described herein again.

S604: The terminal device sends a first request message to the first EES, where the first request message includes the information about the terminal device. Correspondingly, the first EES receives the first request message from the terminal device.

It may be understood that S604 corresponds to S101. For related descriptions of S604, refer to the descriptions of S101. Details are not described herein again.

S605: The first EES determines, based on the information about the terminal device, a first EAS corresponding to the terminal device.

After receiving the first request message from the terminal device, the first EES may perform authorization check, to check whether the terminal device is authorized to perform the operation. The first EES may use a capability of a 3GPP core network (for example, querying a location of the terminal device) and obtain a location of an area served by at least one EAS, and may determine, based on location information of the terminal device and the location of the area served by the at least one EAS, the first EAS corresponding to the terminal device.

S606: The first EES obtains information about a first UPF.

After determining, based on the information about the terminal device, the first EAS corresponding to the terminal device, the EES may obtain the information about the first UPF corresponding to the first EAS corresponding to the terminal device. The first UPF is a UPF corresponding to the first EAS corresponding to the terminal device. In a possible implementation, the first EES receives an EAS registration request from the first EAS corresponding to the terminal device, where the request carries the UPF information corresponding to the first EAS corresponding to the terminal device. In another possible implementation, the first EES may obtain, in a preconfiguration manner, the UPF information corresponding to the first EAS corresponding to the terminal device, or configure, by using a network management system, the UPF information corresponding to the first EAS corresponding to the terminal device.

S607: The first EES sends a third request message to the 5GC, where the third request message includes the information about the first UPF. Correspondingly, the 5GC receives the third request message from the EES.

After determining the first EAS corresponding to the terminal device and the information about the first UPF, the EES may send the third request message to the 5GC, where the third request message includes the information about the first UPF.

S608: The 5GC modifies a user plane path of the first UPF based on the information about the first UPF.

After receiving the third request message from the EES, the 5GC may modify the user plane path of the first UPF based on the information about the first UPF in the request. Modification of the user plane path may be understood as adding a UPF path from the terminal device to the first EAS corresponding to the terminal device. Specifically, an SMF in the 5GC may modify the user plane path of the first UPF based on the information about the first UPF.

S609: The 5GC sends a third response message to the first EES. Correspondingly, the first EES receives the third response message from the 5GC.

After modifying the user plane path of the first UPF based on the information about the first UPF, the 5GC may send the third response message to the first EES. For example, the SMF sends a user plane path management notification (UP path management notification) message (accept or not success or not) to an NEF, and the NEF sends the user plane path management notification message to the first EES.

After receiving the third response message from the 5GC, the first EES may determine that the first EAS corresponding to the terminal device is an EAS whose user plane path has been modified. For specific implementations of S607 to S609, refer to the following related descriptions about cases in which the ECS/first EES requests the 5GC to modify the user plane path of the first UPF and the 5GC modifies the user plane path of the first UPF in FIG. 7 to FIG. 9A and FIG. 9B. Details are not described herein.

S610: The first EES sends a first response message to the terminal device, where the first response message includes information about the first EAS corresponding to the terminal device.

It may be understood that S610 corresponds to S208. For related descriptions of S610, refer to the descriptions of S208. Details are not described herein again.

In embodiments of this application, the first EES may determine the first EAS, and then the first EES triggers, based on the information about the first UPF corresponding to the first EAS, the network side to modify the user plane path. Therefore, the UPF and the first EES/first EAS that correspond to the terminal device are co-located, for example, deployed in a same equipment room/data center; or the first EES/first EAS is closest to the UPF connected to the terminal device, to ensure a shortest N6 latency.

In conclusion, the ECS/first EES requests the 5GC to modify the user plane path of the first UPF, and the 5GC modifies the user plane path of the first UPF (corresponding to steps S406 to S408, S506 to S508, and S607 to S609). Specific implementation may be as follows:

FIG. 7 is an interaction diagram of still another communication method according to an embodiment of this application. The method may be described by using an example in which a terminal device and a core network device are used as execution bodies for interaction. The core network device may include an ECS/EES, a network exposure function network element (NEF network element), a unified data repository network element (for example, a UDR network element), a policy control function network element (for example, a PCF network element), and a session management network element (for example, an SMF network element). The following uses the NEF, the UDR, the PCF, the SMF, and the like as examples for description. Names of these network elements are not essentially limited. In addition, the execution bodies for interaction are not limited in this application. For example, the terminal device may alternatively be a chip, a chip system, or a processor that supports the terminal device in implementing the method, or may be a logical module or software that can implement all or some functions of the terminal device, and the core network device may alternatively be a chip, a chip system, or a processor that supports the core network device in implementing the method, or may be a logical module or software that can implement all or some functions of the core network device. As shown in FIG. 7, the communication method may include at least the following steps. S702 to S705 are optional steps.

S701: The ECS/first EES sends a sixth request message/third request message that includes information about a first UPF to the NEF. Correspondingly, the NEF receives the sixth request message/third request message from the ECS/first EES.

The sixth request message includes UPF information corresponding to the first EES corresponding to the terminal device/information about the first UPF (because the UPF corresponding to the first EES is the same as the first UPF in S406 and S506, the information about the first UPF is used as an example for description), the first UPF is a UPF corresponding to a first EAS corresponding to the terminal device, and the third request message includes the information about the first UPF.

S702: The NEF sends the information about the first UPF to the UDR/UDM. Correspondingly, the UDR/UDM receives the information about the first UPF.

The information about the first UPF may be an ID of the UPF, address information of the UPF, and the like. Optionally, information about the terminal device may be further carried, for example, an ID of the terminal device. For specific information about the terminal device, refer to the descriptions in S101.

Optionally, the UDR/UDM may store the information about the first UPF, and may further store the information about the terminal device.

After receiving the sixth request message/third request message from the ECS/first EES, the NEF may send the information about the first UPF to the UDR/UDM, and optionally, the information about the terminal device may be further sent.

In a possible implementation, the NEF sends the information about the first UPF to the UDM, and optionally, may further send the information about the terminal device. The UDM may send the information about the first UPF to the UDR, and optionally, may further send the information about the terminal device. Optionally, the UDM stores the information about the first UPF, and may further store the information about the terminal device.

S703: The NEF sends a sixth response message/third response message to the ECS/first EES.

After storing the information about the terminal device and the information about the first UPF, the UDR may send the sixth response message/third response message to the ECS/first EES by using the NEF. Optionally, the response may include indication information that indicates whether the sixth request message/third request message is successfully stored or whether the network side is successfully triggered to modify a user plane path of the first UPF.

S704: The UDR/UDM sends a seventh request message to the PCF, where the seventh request message includes the information about the terminal device and/or the information about the first UPF. Correspondingly, the PCF receives the seventh request message from the UDR/UDM.

The seventh request message is used to request to modify the user plane path of the first UPF for the terminal device.

S705: The PCF sends an eighth request message to the SMF, where the eighth request message includes the information about the terminal device and/or the information about the first UPF. Correspondingly, the SMF receives the eighth request message from the PCF.

The eighth request message is used to request to modify the user plane path of the first UPF for the terminal device. It may be understood that after receiving the seventh request message from the UDR, the PCF forwards the seventh request message to the SMF, or the PCF sends the eighth request message to the SMF. The information about the terminal device may be an ID of the terminal device. For specific information about the terminal device, refer to the descriptions in S101.

S702 to S705 are optional steps. In an optional implementation parallel to S702 to S705, the NEF may send the seventh request message to the SMF without forwarding by the PCF.

S706: The SMF modifies the user plane path of the first UPF for the terminal device based on the information about the terminal device and the information about the first UPF.

After receiving the eighth request message from the PCF, the SMF may modify the user plane path of the first UPF for the terminal device based on the information about the terminal device and the information about the first UPF that are included in the eighth request message.

In a possible implementation, if the UPF information is a UPF ID, a correspondence between a UPF ID and a UPF IP (UPF instance (instance)) is configured in the SMF, and the SMF may determine the UPF IP corresponding to the UPF ID based on the correspondence, and then modify the user plane path of the first UPF based on the UPF IP. The ECS, the first EES, and the first EAS may be configured with the UPF ID, to protect a network topology from being exposed to a third party (that is, the UPF IP address is not exposed to the third party), and enhance communication security. Optionally, after receiving the eighth request message from the PCF, the SMF may send the UPF ID to an NRF. The correspondence between the UPF ID and the UPF IP (UPF instance (instance)) is configured in the NRF. The NRF may determine the UPF IP corresponding to the UPF ID based on the correspondence, and send the UPF IP to the SMF. The SMF may modify the user plane path of the first UPF based on the UPF IP. The NRF configures the correspondence between the UPF ID and the UPF IP (UPF instance (instance)), to reduce complexity of storage by the SMF. In addition, SMFs are distributed, and the NRF stores information such as the correspondence between the UPF ID and the UPF IP (UPF instance (instance)) in a unified manner, to avoid repeated storage of UPF information on different SMFs. This saves storage resources.

In embodiments of this application, on the network side, the user plane path of the first UPF may be modified based on the information about the first UPF. Therefore, the UPF and the first EES/first EAS that correspond to the terminal device are co-located in embodiments in FIG. 4A and FIG. 4B to FIG. 6, for example, deployed in a same equipment room/data center; or the first EES/first EAS is closest to the UPF connected to the terminal device, to ensure a shortest N6 latency.

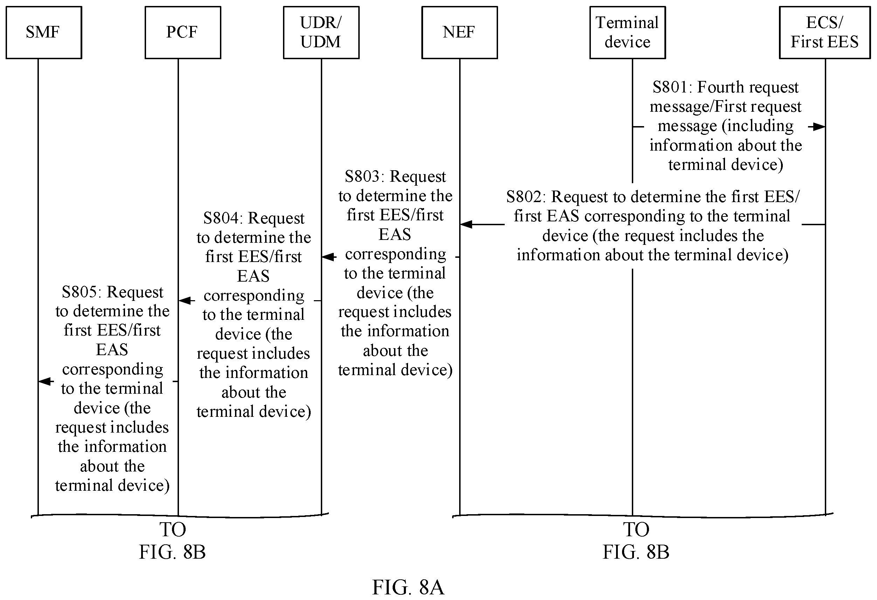

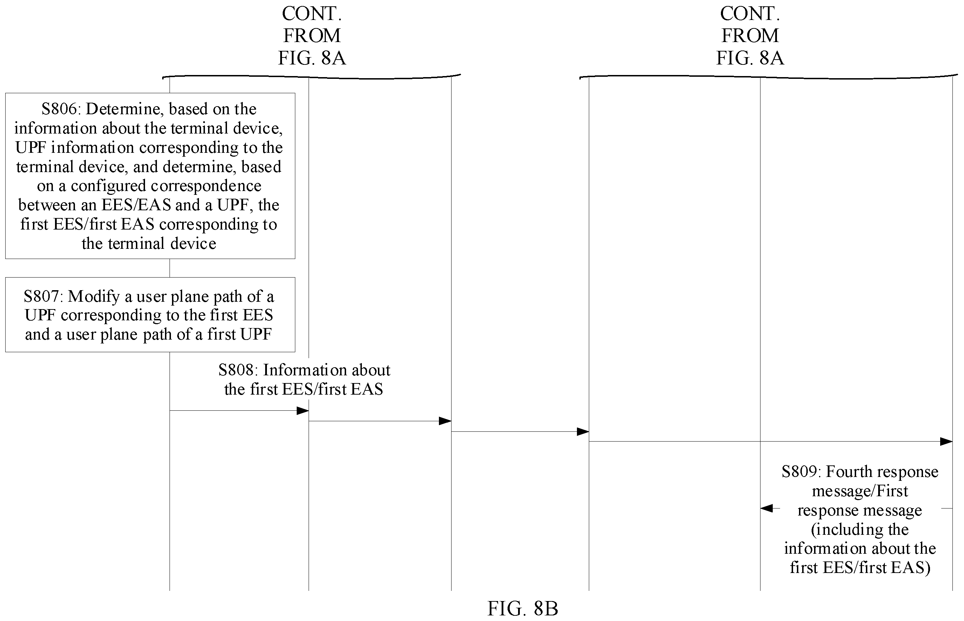

FIG. 8A and FIG. 8B are an interaction diagram of still another communication method according to an embodiment of this application. The method may be described by using an example in which a terminal device and a core network device are used as execution bodies for interaction. The core network device may include an ECS/EES, a network exposure function network element (NEF network element), a unified data repository network element (for example, a UDR network element), a policy control function network element (for example, a PCF network element), and a session management network element (for example, an SMF network element). The following uses the NEF, the UDR, the PCF, the SMF, and the like as examples for description. Names of these network elements are not essentially limited. In addition, the execution bodies for interaction are not limited in this application. For example, the terminal device may alternatively be a chip, a chip system, or a processor that supports the terminal device in implementing the method, or may be a logical module or software that can implement all or some functions of the terminal device, and the core network device may alternatively be a chip, a chip system, or a processor that supports the core network device in implementing the method, or may be a logical module or software that can implement all or some functions of the core network device. As shown in FIG. 8A and FIG. 8B, the communication method may include at least the following steps.

S801: The terminal device sends a fourth request message/first request message that includes information about the terminal device to the ECS/first EES. Correspondingly, the ECS/first EES receives the fourth request message/first request message from the terminal device.

It may be understood that for related descriptions of the first request message and the information about the terminal device, refer to the descriptions of S101. Details are not described herein again.

S802: The ECS/first EES requests the NEF to determine a first EES/first EAS corresponding to the terminal device, where the request includes the information about the terminal device.

After receiving the fourth request message/first request message from the terminal device, the ECS/first EES may request the NEF to determine the first EES/first EAS corresponding to the terminal device. The request information may include the information about the terminal device. The information about the terminal device may be an ID of the terminal device and location information (for example, a location) of the terminal device.

S803: The NEF requests the UDR/UDM to determine the first EES/first EAS corresponding to the terminal device, where the request includes the information about the terminal device.

The NEF may send the information about the terminal device to the UDR. Optionally, the UDR/UDM stores the information about the terminal device. For example, the UDR/UDM stores a correspondence between the ID of the terminal device and an IP of the terminal device, determines the IP of the terminal device based on the ID of the terminal device, and stores the IP of the terminal device and the location information of the terminal device.

S804: The UDR/UDM requests the PCF to determine the first EES/first EAS corresponding to the terminal device, where the request includes the information about the terminal device.

The UDR/UDM may forward, to the PCF, request information for requesting to determine the first EES/first EAS corresponding to the terminal device, where the request information may include the information about the terminal device. The information about the terminal device may be the IP of the terminal device and the location information of the terminal device.

S805: The PCF requests the SMF to determine the first EES/first EAS corresponding to the terminal device, where the request includes the information about the terminal device.

S806: The SMF determines, based on the information about the terminal device, UPF information corresponding to the terminal device, and determines, based on a configured correspondence between an EES/EAS and a UPF, the first EES/first EAS corresponding to the terminal device.

A correspondence between an EES/EAS and a UPF ID or a UPF IP (UPF instance) is configured in the SMF. The SMF may determine, based on the IP of the terminal device or the location information of the terminal device, the UPF information corresponding to the terminal device, and determine, based on the UPF information of the terminal device and the correspondence, the first EES/first EAS corresponding to the terminal device.

S807: The SMF modifies a user plane path of a UPF corresponding to the first EES and a user plane path of a first UPF.

S808: The SMF sends information about the first EES/first EAS to the ECS/first EES. Correspondingly, the ECS/first EES receives the information about the first EES/first EAS from the SMF.

In a possible implementation, after determining, based on the UPF information corresponding to the terminal device, the information about the first EES/first EAS corresponding to the terminal device, the SMF forwards the information about the first EES/first EAS to the ECS/first EES by using the UDR and the NEF.

S809: The ECS/first EES sends a fourth response message/first response message that includes the information about the first EES/first EAS to the terminal device. Correspondingly, the terminal device receives the fourth response message/first response message from the ECS/first EES.

The ECS/first EES receives the fourth response message/first response message from the terminal device, and may determine, based on the response message, the first EES/first EAS corresponding to the terminal device.

In embodiments of this application, on a network side, the first EES/first EAS of the terminal device may be determined, and the user plane path of the UPF corresponding to the first EES and the user plane path of the UPF corresponding to the first EAS may be modified. Therefore, the UPF and the first EES/first EAS that correspond to the terminal device are co-located, for example, deployed in a same equipment room/data center; or the first EES/first EAS is closest to the UPF connected to the terminal device, to ensure a shortest N6 latency.

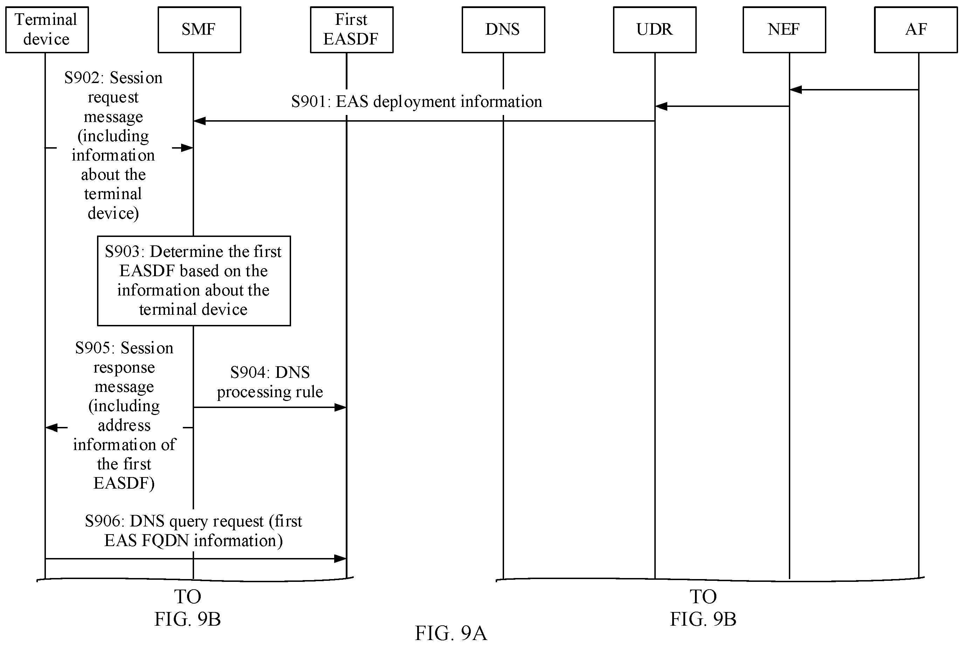

FIG. 9A and FIG. 9B are an interaction diagram of still another communication method according to an embodiment of this application. The method may be described by using an example in which a terminal device and a core network device are used as execution bodies for interaction. The core network device may include an application function network element (for example, an AF network element), a network exposure function network element (for example, an NEF network element), a unified data repository network element (for example, a UDR network element), a network dynamic service network element (for example, an NDS network element), a first edge application server discovery function (edge application server discovery function, EASDF) network element (for example, a first EASDF network element), and a session management network element (for example, an SMF network element). The following uses the AF, the NEF, the UDR, the DNS, the first EASDF, the SMF, and the like as examples for description. Names of these network elements are not essentially limited. In addition, the execution bodies for interaction are not limited in this application. For example, the terminal device may alternatively be a chip, a chip system, or a processor that supports the terminal device in implementing the method, or may be a logical module or software that can implement all or some functions of the terminal device, and the core network device may alternatively be a chip, a chip system, or a processor that supports the core network device in implementing the method, or may be a logical module or software that can implement all or some functions of the core network device. As shown in FIG. 9A and FIG. 9B, the communication method may include at least the following steps. Step S904 is an optional step.

S901: The AF sends EAS deployment information to the SMF.

The AF may send the EAS deployment information to the SMF. The EAS deployment information includes one or more pieces of EAS instance information corresponding to an EAS ID. The EAS instance information includes address information of one or more EASs, and IP address range information corresponding to one or more EAS instances, and optionally, may include at least one UPF ID and/or UPF address information corresponding to the EAS instance.

In a possible implementation, the AF may send the EAS deployment information to the NEF, and the NEF sends the EAS deployment information to the SMF.

S902: The terminal device sends a session request message to the SMF, where the session request message includes information about the terminal device. Correspondingly, the SMF receives the session request message from the terminal device.

The terminal device may send the session request message to the SMF, to request to set up a session. Alternatively, the terminal device may send the session request message to a RAN, and the RAN further sends the session request message to the SMF. Alternatively, the terminal device may send the session request message to the AMF, and the AMF sends the session request message to the SMF. Alternatively, the terminal device may send the session request message to the AMF via the RAN, and the AMF sends the session request message to the SMF.

S903: The SMF determines the first EASDF based on the information about the terminal device.

After receiving the session request message from the terminal device, the SMF may select the first EASDF, where the first EASDF is used to discover a first EAS corresponding to the terminal device.

S904: The SMF sends a DNS processing rule to the first EASDF. Correspondingly, the first EASDF receives the DNS processing rule from the SMF.

After determining the first EASDF based on the information about the terminal device, the SMF may send the DNS processing rule to the first EASDF.

S905: The SMF sends a session response message to the terminal device, where the session response message includes address information of the first EASDF. Correspondingly, the terminal device receives the session response message from the SMF.

The SMF sends the session response message to the terminal device, or may send the session response message to the terminal device via the RAN. Alternatively, the SMF may send the session response message to the AMF, and the AMF sends the session response message to the terminal device. Alternatively, the SMF may send the session response message to the AMF via the RAN, and the AMF sends the session response message to the terminal device.

The SMF sends an address of the first EASDF to the terminal device as an address of a DNS server.

S906: The terminal device sends a DNS query request to the first EASDF, where the DNS query request includes first EAS full qualified domain name (full qualified domain name, FQDN) information. Correspondingly, the first EASDF receives the DNS query request from the terminal device.

The terminal device sends the DNS query request (including the first EAS FQDN information) to the first EASDF.

S907: The first EASDF requests EDNS client subnet (EDNS client subnet, ECS) option information from the SMF.

The first EASDF requests the SMF to obtain the ECS option (ECS OPTION) information or an address of a local DNS (local DNS).

S908: The SMF provides the ECS option information for the first EASDF.

The SMF provides the ECS option (ECS OPTION) information for the first EASDF, that is, sends the ECS option information to the first EASDF. The ECS option information may include an IP address of a location of the terminal device, a UPF corresponding to the terminal device, or a local domain name server (local DNS server) selected based on the location of the terminal device.

S909: The first EASDF sends the DNS query request message to the DNS. Correspondingly, the DNS receives the DNS query request message from the first EASDF.

The first EASDF sends the DNS query message to the DNS, where the DNS query message may include an IP address of the first EASDF.

S910: The DNS sends a DNS query response message to the first EASDF. Correspondingly, the first EASDF receives the DNS query response message from the DNS.

The DNS sends the DNS query response message to the first EASDF. The DNS query response message may include IP address information of the first EAS.

S911: The first EASDF sends address information of the first EAS to the SMF. Correspondingly, the SMF receives the address information of the first EAS from the first EASDF. The EASDF reports an IP address of the EAS and the EAS FQDN to the SMF.

S912: The SMF determines, based on the address information of the first EAS, a first UPF corresponding to the first EAS.

Specifically, the SMF may determine UPF information, namely, the first UPF, based on UPF information corresponding to an EAS IP in the EAS deployment information.

S913: The SMF modifies a user plane path of the first UPF.

For S913, refer to S807. In addition, the SMF determines the first UPF based on the EAS IP address-EAS IP address range information, and may perform selection and insertion of a ULCL/BP.

S914: The first EASDF sends the DNS query response to the terminal device, where the DNS query response includes DNS information. Correspondingly, the terminal device receives the DNS query response from the first EASDF.

The first EASDF may send the DNS response to the terminal device.

In embodiments of this application, in an MEC scenario, the AF provides the EAS deployment information for the SMF. Therefore, the SMF can determine the first UPF based on the selected EAS IP address-EAS IP address range information, and modify the user plane path of the first UPF. In this way, the first EAS is closest to the UPF connected to the terminal device, to ensure a shortest N6 latency.

The foregoing describes the method embodiments provided in embodiments of this application. The following describes apparatus embodiments in embodiments of this application.

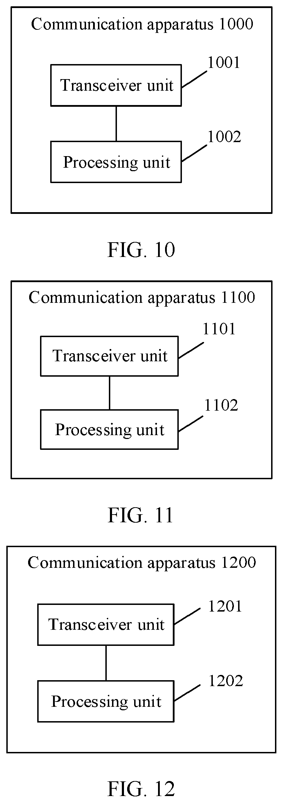

FIG. 10 is a diagram of a structure of a communication apparatus according to an embodiment of this application. The communication apparatus may be an EES, or may be an apparatus (for example, a chip, a chip system, or a circuit) in the EES. As shown in FIG. 10, the communication apparatus 1000 at least includes a transceiver unit 1001 and a processing unit 1002.

The transceiver unit 1001 is configured to receive a first request message from a terminal device, where the first request message is used to request an EAS corresponding to the terminal device.

The transceiver unit 1001 is further configured to send, to the terminal device, information about a first EAS or at least one EAS corresponding to the terminal device.

In an implementation, the communication apparatus 1000 further includes:
the processing unit 1002, configured to determine the first EAS based on UPF information corresponding to the at least one EAS.

In an implementation, the processing unit 1002 is further configured to obtain the UPF information corresponding to the at least one EAS.

In an implementation, the transceiver unit 1001 obtaining the UPF information corresponding to the at least one EAS is specifically configured to:
receive a second request message of the at least one EAS, where the second request message includes the UPF information corresponding to the EAS.

In an implementation, the first request message includes information about the terminal device, and the processing unit 1002 determining, based on the UPF information corresponding to the at least one EAS corresponding to the terminal device, a first EAS corresponding to the terminal device is specifically configured to:
obtain, based on the information about the terminal device, a UPF corresponding to the terminal device; and
determine, based on the UPF corresponding to the terminal device and the UPF information corresponding to the at least one EAS, the first EAS.

In an implementation, the first request message includes UPF information of a first EES corresponding to the terminal device, and the processing unit 1002 determining, based on the UPF information corresponding to the at least one EAS corresponding to the terminal device, the first EAS corresponding to the terminal device is specifically configured to:
determine the first EAS based on the UPF information of the first EES and the UPF information corresponding to the at least one EAS.

In an implementation, the first request message includes indication information, the indication information indicates whether traffic influence has been performed on a first UPF, and the first UPF is a UPF corresponding to the first EES corresponding to the terminal device. The processing unit 1002 determining, based on the UPF information corresponding to the at least one EAS corresponding to the terminal device, the first EAS corresponding to the terminal device is specifically configured to:
determine the first EAS based on the indication information and the UPF information of the at least one EAS.

In an implementation, the processing unit 1002 determining, based on the indication information and the UPF information corresponding to the at least one EAS corresponding to the terminal device, the first EAS corresponding to the terminal device is specifically configured to:
if the indication information indicates that traffic influence has been performed on the first UPF, determine that an EAS corresponding to the same UPF as the first EES is the first EAS; or
if the indication information indicates that traffic influence is not performed on the first UPF, send a third request message to a 5GC, where the third request message is used to request to modify a user plane path of the first UPF, and the third request message includes information about the first UPF; and
determine that an EAS corresponding to the first UPF whose user plane path is modified is the first EAS.

In an implementation, the transceiver unit 1001 is further configured to send, to the terminal device, the UPF information corresponding to the at least one EAS corresponding to the terminal device.

In an implementation, the transceiver unit 1001 sending, to the terminal device, the information about the first EAS or the at least one EAS corresponding to the terminal device is specifically configured to send a first response message to the terminal device, where the first response message is in response to the first request message, and the first response message includes the information about the first EAS or the at least one EAS.

In an implementation, the UPF information includes one or more of an ID of a UPF, a URI of the UPF, an FQDN, and an IP address.

In an implementation, the transceiver unit 1001 is configured to receive the first request message from the terminal device, where the first request message is used to request the EAS corresponding to the terminal device, and the first request message includes the information about the terminal device.

The processing unit 1002 is configured to determine, based on the information about the terminal device, the first EAS corresponding to the terminal device.

The transceiver unit 1001 is further configured to request to modify the user plane path of the first UPF, where the third request message includes the information about the first UPF, and the first UPF is a UPF corresponding to the first EAS.

The transceiver unit 1001 is further configured to send the first EAS to the terminal device, where the user plane path of the first UPF corresponding to the first EAS has been modified.

In an implementation, the transceiver unit 1001 is further configured to receive a third response message from the terminal device, where the third response message is used to respond to the third request message.

In an implementation, the transceiver unit 1001 sending the first EAS to the terminal device is specifically configured to send a first response message to the terminal device, where the first response message is in response to the first request message, and the first response message includes the information about the first EAS.

For more detailed descriptions of the transceiver unit 1001 and the processing unit 1002, directly refer to related descriptions of the EES in the foregoing method embodiments shown in FIG. 2 to FIG. 10. Details are not described herein again.

FIG. 11 is a diagram of a structure of another communication apparatus according to an embodiment of this application. The communication apparatus may be an ECS, or may be an apparatus (for example, a chip, a chip system, or a circuit) in the ECS. As shown in FIG. 11, the communication apparatus 1100 at least includes a transceiver unit 1101 and a processing unit 1102.

The transceiver unit 1101 is configured to receive a fourth request message from a terminal device, where the fourth request message is used to request an edge enabler server EES corresponding to the terminal device.

The processing unit 1102 is configured to determine, based on UPF information corresponding to at least one EES corresponding to the terminal device, a first EES corresponding to the terminal device.

The transceiver unit 1101 is further configured to send information about the first EES to the terminal device.

In an implementation, the transceiver unit 1101 is further configured to obtain the UPF information corresponding to the at least one EES.

In an implementation, the transceiver unit 1101 obtaining the UPF information corresponding to the at least one EES is specifically configured to receive a fifth request message from the at least one EES, where the fifth request message includes the UPF information corresponding to the EES.

In an implementation, the fourth request message includes information about the terminal device, and the processing unit 1102 determining, based on the UPF information corresponding to the at least one EES corresponding to the terminal device, the first EES corresponding to the terminal device is specifically configured to: obtain, based on the information about the terminal device, a UPF corresponding to the terminal device; and determine the first EES based on the UPF corresponding to the terminal device and the UPF information corresponding to the at least one EES.

In an implementation, the transceiver unit 1101 is configured to receive the fourth request message from the terminal device, where the fourth request message is used to request the edge enabler server EES corresponding to the terminal device, and the fourth request message includes the information about the terminal device.

The processing unit 1102 is configured to determine, based on the information about the terminal device, the first EES corresponding to the terminal device.

The transceiver unit 1101 is further configured to send the information about the first EES and indication information to the terminal device based on the UPF information corresponding to the first EES and the UPF information corresponding to the at least one EAS corresponding to the terminal device, where the indication information indicates whether traffic influence has been performed on a candidate UPF, and the candidate UPF is a UPF corresponding to one or more of the at least one EAS.

In an implementation, if the UPF corresponding to the first EES is the same as the UPF corresponding to the first EAS, the transceiver unit 1101 is further configured to send a sixth request message to a 5GC, where the sixth request message is used to request to modify a user plane path of a first UPF, and the third request message includes the UPF information corresponding to the first EES or information about the first UPF.

The transceiver unit 1101 is further configured to receive a sixth response message from a 5GC, where the sixth response message is in response to the sixth request message, and the indication information indicates that traffic influence has been performed on the candidate UPF.

In an implementation, if the UPF corresponding to the first EES is different from the first UPF, the indication information indicates that traffic influence is not performed on the candidate UPF.

For more detailed descriptions of the transceiver unit 1101 and the processing unit 1102, directly refer to related descriptions of the ECS in the foregoing method embodiments shown in FIG. 2 to FIG. 10. Details are not described herein again.

FIG. 12 is a diagram of a structure of still another communication apparatus according to an embodiment of this application. The communication apparatus may be a terminal device, or may be an apparatus (for example, a chip, a chip system, or a circuit) in the terminal device. As shown in FIG. 12, the communication apparatus 1200 at least includes a transceiver unit 1201 and a processing unit 1202.

The transceiver unit 1201 is configured to send a first request message to a first EES, where the first request message is used to request an EAS corresponding to the terminal device.

In an implementation, the transceiver unit 1201 is further configured to receive information about the first EES and indication information from an ECS, where the indication information indicates whether traffic influence has been performed on a candidate UPF, and the candidate UPF is a UPF corresponding to one or more of at least one EAS.

In an implementation, the first request message includes the indication information.

In an implementation, the transceiver unit 1201 is further configured to receive, from the EES, UPF information corresponding to the at least one EAS corresponding to the terminal device.

The communication apparatus 1200 further includes:
the processing unit 1202, configured to determine a first EAS based on the indication information, UPF information corresponding to the terminal device, and the UPF information of the at least one EAS.

In an implementation, the transceiver unit 1201 is further configured to receive a first response message from the first EES, where the first response message is in response to the first request message, and the first response message includes the information about the first EAS or the at least one EAS corresponding to the terminal device.

For more detailed descriptions of the transceiver unit 1201 and the processing unit 1202, directly refer to related descriptions of the terminal device in the foregoing method embodiments shown in FIG. 2 to FIG. 10. Details are not described herein again.

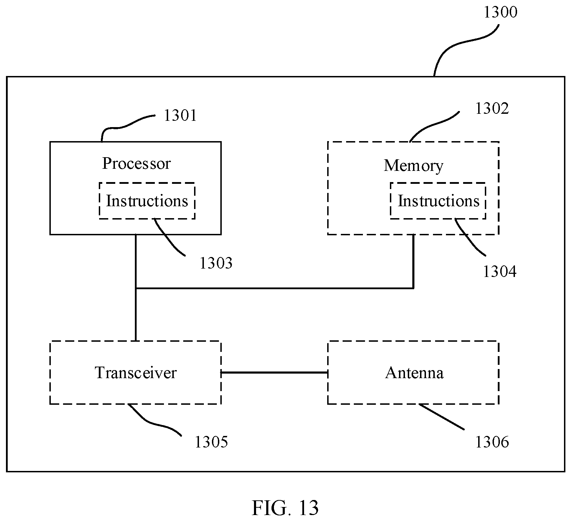

FIG. 13 is a diagram of a structure of still another communication apparatus according to an embodiment of this application. As shown in FIG. 13, the communication apparatus 1300 may include one or more processors 1301. The processor 1301 may also be referred to as a processing unit, and may implement a specific control function. The processor 1301 may be a general-purpose processor, a dedicated processor, or the like. For example, the processor 1301 may be a baseband processor or a central processing unit. The baseband processor may be configured to process a communication protocol and communication data. The central processing unit may be configured to: control the communication apparatus (for example, a base station, a base station chip, a terminal, a terminal chip, a DU, or a CU), execute a software program, and process data of the software program.

In an optional design, the processor 1301 may also store instructions 1303 and/or data, and the instructions 1303 and/or the data may be run by the processor, to enable the apparatus 1300 to perform the method described in the foregoing method embodiments.

In another optional design, the processor 1301 may include a transceiver unit configured to implement receiving and sending functions. For example, the transceiver unit may be a transceiver circuit, an interface, an interface circuit, or a communication interface. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, the apparatus 1300 may include a circuit, and the circuit may implement the sending, receiving, or communication function in the foregoing method embodiments.

Optionally, the apparatus 1300 may include one or more memories 1302, on which instructions 1304 and/or data may be stored. The instructions 1304 and/or the data may be run on the processor, to enable the apparatus 1300 to perform the method described in the foregoing method embodiments. Optionally, the memory may further store data. Optionally, the processor may also store instructions and/or data. The processor and the memory may be separately disposed, or may be integrated together. For example, the correspondence described in the foregoing method embodiments may be stored in the memory or the processor.

Optionally, the apparatus 1300 may further include a transceiver 1305 and/or an antenna 1306. The processor 1301 may be referred to as a processing unit, and control the apparatus 1300. The transceiver 1305 may be referred to as a transceiver unit, a transceiver circuit, a transceiver apparatus, a transceiver module, or the like, and is configured to implement sending and receiving functions.

Optionally, the apparatus 1300 in this embodiment of this application may be configured to perform the methods described in FIG. 2 to FIG. 9A and FIG. 9B in embodiments of this application.

In an implementation, the communication apparatus 1300 may be an EES, or may be an apparatus (for example, a chip, a chip system, or a circuit) in the EES. When computer program instructions stored in the memory 1302 are executed, the processor 1301 is configured to perform operations performed by the processing unit 1002 in the foregoing embodiments, the transceiver 1305 is configured to perform operations performed by the transceiver unit 1001 in the foregoing embodiments, and the transceiver 1305 is further configured to receive information from other communication apparatuses than the communication apparatus. The EES or the apparatus in the EES may be further configured to perform various methods performed by the EES in the method embodiments in FIG. 2 to FIG. 9A and FIG. 9B. Details are not described again.

In an implementation, the communication apparatus 1300 may be an ECS, or may be an apparatus (for example, a chip, a chip system, or a circuit) in the ECS. When computer program instructions stored in the memory 1302 are executed, the processor 1301 is configured to perform operations performed by the processing unit 1102 in the foregoing embodiments, the transceiver 1305 is configured to perform operations performed by the transceiver unit 1001 in the foregoing embodiments, and the transceiver 1305 is further configured to receive information from other communication apparatuses than the communication apparatus. The ECS or the apparatus in the ECS may be further configured to perform various methods performed by the ECS in the method embodiments in FIG. 2 to FIG. 9A and FIG. 9B. Details are not described again.

In an implementation, the communication apparatus 1300 may be a terminal device, or may be an apparatus (for example, a chip, a chip system, or a circuit) in the terminal device. When computer program instructions stored in the memory 1302 are executed, the processor 1301 is configured to perform operations performed by the processing unit 1202 in the foregoing embodiments, the transceiver 1305 is configured to perform operations performed by the transceiver unit 1201 in the foregoing embodiments, and the transceiver 1305 is further configured to send information to other communication apparatuses than the communication apparatus. The terminal device or the apparatus in the terminal device may be further configured to perform various methods performed by the terminal device in the method embodiments in FIG. 2 to FIG. 9A and FIG. 9B. Details are not described again.

The processor and the transceiver described in this application may be implemented on an integrated circuit (integrated circuit, IC), an analog IC, a radio frequency integrated circuit (radio frequency interface chip, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, such as a complementary metal oxide semiconductor (complementary metal oxide semiconductor, CMOS), an N-channel metal oxide semiconductor (nMetal-oxide-semiconductor, NMOS), a P-channel metal oxide semiconductor (positive-channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The apparatus described in the foregoing embodiments may be a first communication device or a second communication device. However, a range of the apparatus described in this application is not limited thereto, and a structure of the apparatus may not be limited to FIG. 13. The apparatus may be an independent device, or may be a part of a larger device. For example, the apparatus may be:
(1) an independent integrated circuit IC, a chip, or a chip system or subsystem;
(2) a set of one or more ICs, where optionally, the IC set may also include a storage component configured to store data and/or instructions;
(3) an ASIC, for example, a modem;
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, a machine device, a home device, a medical device, an industrial device, or the like;
(6) another device or the like.

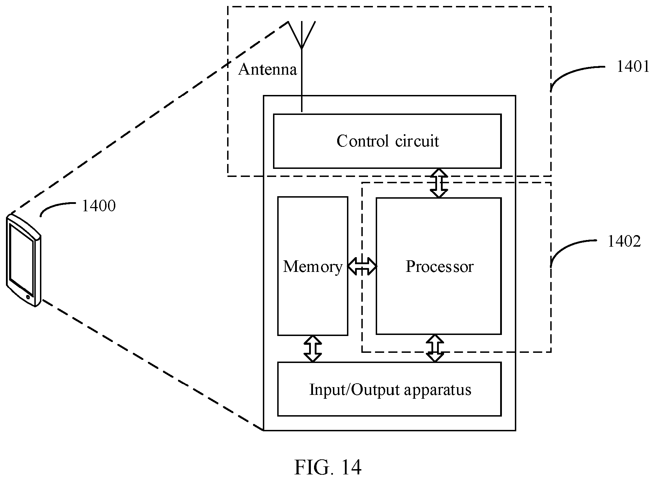

FIG. 14 is a diagram of a structure of a terminal device according to an embodiment of this application. For ease of description, FIG. 14 shows only main components of the terminal device. As shown in FIG. 14, the terminal device 1400 includes a processor, a memory, a control circuit, an antenna, and an input/output apparatus. The processor is mainly configured to process a communication protocol and communication data, control the entire terminal, execute a software program, and process data of the software program. The memory is mainly configured to store the software program and the data. The radio frequency circuit is mainly configured to: perform conversion between a baseband signal and a radio frequency signal, and process the radio frequency signal. The antenna is mainly configured to receive or send a radio frequency signal in a form of an electromagnetic wave. The input/output apparatus like a touchscreen, a display, or a keyboard is mainly configured to: receive data input by a user and output data to the user.

After the terminal is powered on, the processor may read a software program in a storage unit, interpret and execute instructions of the software program, and process data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to the outside in an electromagnetic wave form by using the antenna. When data is sent to the terminal, the radio frequency circuit receives the radio frequency signal through the antenna, converts the radio frequency signal into a baseband signal, and outputs the baseband signal to the processor. The processor converts the baseband signal into data, and processes the data.

For ease of description, FIG. 14 shows only one memory and one processor. In an actual terminal, there may be a plurality of processors and memories. The memory may also be referred to as a storage medium, a storage device, or the like. This is not limited in this embodiment of this application.

In an optional implementation, the processor may include a baseband processor and a central processing unit. The baseband processor is mainly configured to process a communication protocol and communication data. The central processing unit is mainly configured to: control the entire terminal, execute a software program, and process data of the software program. The processor in FIG. 14 integrates functions of the baseband processor and the central processing unit. A person skilled in the art may understand that the baseband processor and the central processing unit may alternatively be separate processors, and are interconnected by using a technology such as a bus. A person skilled in the art may understand that the terminal may include a plurality of baseband processors to adapt to different network standards, and the terminal may include a plurality of central processing units to enhance a processing capability of the terminal. All the components of the terminal may be connected through various buses. The baseband processor may also be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have receiving and sending functions may be considered as a transceiver unit 1401 of the terminal device 1400, and the processor having a processing function may be considered as a processing unit 1402 of the terminal device 1400. As shown in FIG. 14, the terminal device 1400 includes the transceiver unit 1401 and the processing unit 1402. The transceiver unit may also be referred to as a transceiver, a transceiver machine, a transceiver apparatus, or the like. Optionally, a component configured to implement the receiving function in the transceiver unit 1401 may be considered as a receiving unit, and a component configured to implement the sending function in the transceiver unit 1401 may be considered as a sending unit. That is, the transceiver unit 1401 includes the receiving unit and the sending unit. For example, the receiving unit may also be referred to as a receiver, a receive machine, or a receiving circuit, and the sending unit may also be referred to as a transmitter, a transmit machine, or a transmitting circuit. Optionally, the receiving unit and the sending unit may be one integrated unit, or may be a plurality of independent units. The receiving unit and the sending unit may be in one geographical position, or may be distributed in a plurality of geographical positions.

In an implementation, the processing unit 1402 is configured to perform an operation performed by the processing unit 1202 in the foregoing embodiment, and the transceiver unit 1401 is configured to perform an operation performed by the transceiver unit 1201 in the foregoing embodiment. The terminal device 1400 may be further configured to perform various methods performed by the terminal device in the method embodiments in FIG. 2 to FIG. 4A and FIG. 4B. Details are not described again.

An embodiment of this application further provides a computer-readable storage medium. The computer-readable storage medium stores a computer program. When the program is executed by a processor, a procedure related to the EES in the method provided in the foregoing method embodiments may be implemented.

An embodiment of this application further provides a computer-readable storage medium. The computer-readable storage medium stores a computer program. When the program is executed by a processor, a procedure related to the ECS in the method provided in the foregoing method embodiments may be implemented.

An embodiment of this application further provides a computer-readable storage medium. The computer-readable storage medium stores a computer program. When the program is executed by a processor, a procedure related to the terminal device in the method provided in the foregoing method embodiments may be implemented.

An embodiment of this application further provides a computer program product. When the computer program product runs on a computer or a processor, the computer or the processor is enabled to perform one or more steps in any one of the foregoing methods. When the foregoing modules in the device are implemented in a form of software functional unit and sold or used as an independent product, the modules may be stored in the computer-readable storage medium.

An embodiment of this application further provides a chip system, including at least one processor and a communication interface. The communication interface and the at least one processor are interconnected through a line. The at least one processor is configured to run a computer program or instructions to perform some or all steps recorded in the method embodiments corresponding to FIG. 2 to FIG. 4A and FIG. 4B. The chip system may include a chip, or may include a chip and another discrete component.

An embodiment of this application further discloses a communication system. The communication system is configured to implement the methods shown in FIG. 2 to FIG. 9A and FIG. 9B.

It may be understood that the memory in embodiments of this application may be a volatile memory or a nonvolatile memory, or may include a volatile memory and a nonvolatile memory. The non-volatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitation, a plurality of forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). The memory is any other medium that can be used to carry or store expected program code in a form of an instruction or a data structure and that can be accessed by a computer. However, this is not limited thereto. The memory in embodiments of this application may alternatively be a circuit or any other apparatus that can implement a storage function, and is configured to store the program instructions and/or the data.

It should be further understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, a discrete hardware component, or the like. The general-purpose processor may be a microprocessor, or the processor may be any conventional processor or the like.

It should be noted that when the processor is a general-purpose processor, a DSP, an ASIC, an FPGA or another programmable logic device, a discrete gate, a transistor logic device, or a discrete hardware component, the memory (storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that units and algorithm steps in the examples described with reference to embodiments provided in this specification can be implemented by electronic hardware or a combination of computer software and electronic hardware. Whether the functions are executed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for detailed working processes of the foregoing system, apparatus, and unit, refer to corresponding processes in the method embodiments. Details are not described herein again.

In the several embodiments provided in this application, it should be understood that the disclosed system, apparatus, and method may be implemented in another manner. For example, the described apparatus embodiments are merely examples. For example, division into the units is merely division into logical functions and may be other division during actual implementation. For example, a plurality of units or components may be combined or integrated into another system, or some features may be ignored or not performed. In addition, the displayed or discussed mutual coupling or direct coupling or communication connection may be implemented through some interfaces. The indirect coupling or communication connection between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a ROM, a RAM, a magnetic disk, or an optical disc.

A sequence of the steps of the method in embodiments of this application may be adjusted, combined, or removed based on an actual requirement.

The modules/units in the apparatuses in embodiments of this application may be combined, divided, or deleted based on an actual requirement.

In conclusion, the foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

## Claims

1. A communication method, comprising:
receiving a first request message from a terminal device, wherein the first request message is used to request an edge application server corresponding to the terminal device; and
sending, to the terminal device, information about a first edge application server corresponding to the terminal device.

2. The method according to claim 1, wherein the method further comprises:
determining the first edge application server based on user plane function network element information corresponding to at least one edge application server.

3. The method according to claim 2, wherein the method further comprises:
obtaining the user plane function network element information corresponding to the at least one edge application server.

4. The method according to claim 3, wherein the obtaining the user plane function network element information corresponding to the at least one edge application server comprises:
receiving a second request message of the at least one edge application server, wherein the second request message comprises the user plane function network element information corresponding to the edge application server.

5. The method according to any one of claims 2 to 4, wherein the first request message comprises information about the terminal device, and the determining the first edge application server based on the user plane function network element information corresponding to the at least one edge application server comprises:
obtaining, based on the information about the terminal device, user plane function network element information corresponding to the terminal device; and
determining the first edge application server based on the user plane function network element information corresponding to the terminal device and the user plane function network element information corresponding to the at least one edge application server.

6. The method according to any one of claims 2 to 4, wherein the first request message comprises user plane function network element information of a first EES corresponding to the terminal device, and the determining, based on the user plane function network element information corresponding to the at least one edge application server, the first edge application server corresponding to the terminal device comprises:
determining the first edge application server based on the user plane function network element information of the first EES and the user plane function network element information corresponding to the at least one edge application server.

7. The method according to any one of claims 2 to 4, wherein the first request message comprises indication information, the indication information indicates whether traffic influence has been performed on a first user plane function network element, and the first user plane function network element is a user plane function network element corresponding to a first EES corresponding to the terminal device; and
the determining the first edge application server based on the user plane function network element information corresponding to the at least one edge application server comprises:
determining the first edge application server based on the indication information and the user plane function network element information of the at least one edge application server.

8. The method according to claim 7, wherein the determining the first edge application server based on the indication information and the user plane function network element information of the at least one edge application server comprises:
if the indication information indicates that traffic influence has been performed on the first user plane function network element, determining that an edge application server whose corresponding user plane function network element is the same as the user plane function network element corresponding to the first EES is the first edge application server; or
if the indication information indicates that traffic influence is not performed on the first user plane function network element, sending a third request message to a core network device, wherein the third request message is used to request to modify a user plane path of the first user plane function network element, and the third request message comprises information about the first user plane function network element; and determining that an edge application server corresponding to the first user plane function network element whose user plane path has been modified is the first edge application server.

9. The method according to claim 1, wherein the method further comprises:
sending, to the terminal device, user plane function network element information corresponding to the at least one edge application server.

10. The method according to any one of claims 1 to 9, wherein the sending, to the terminal device, the information about the first edge application server corresponding to the terminal device comprises:
sending a first response message to the terminal device, wherein the first response message is in response to the first request message, and the first response message comprises the information about the first edge application server.

11. The method according to any one of claims 1 to 10, wherein the user plane function network element information comprises one or more of an identifier of a user plane function network element, a uniform resource identifier of the user plane function network element, a fully qualified domain name, and an Internet protocol address.

12. A communication method, comprising:
receiving a first request message from a terminal device, wherein the first request message is used to request an edge application server corresponding to the terminal device, and the first request message comprises information about the terminal device;
determining, based on the information about the terminal device, a first edge application server corresponding to the terminal device;
sending a third request message to a core network device, wherein the third request message is used to request to modify a user plane path of a first user plane function network element, the third request message comprises information about the first user plane function network element, and the first user plane function network element is a user plane function network element corresponding to the first edge application server; and
sending the first edge application server to the terminal device, wherein the user plane path of the first user plane function network element corresponding to the first edge application server has been modified.

13. The method according to claim 12, wherein the method further comprises:
receiving a third response message from the terminal device, wherein the third response message is used to respond to the third request message.

14. The method according to claim 12 or 13, wherein the sending the first edge application server to the terminal device comprises:
sending a first response message to the terminal device, wherein the first response message comprises information about the first edge application server.

15. A communication method, comprising:
receiving a fourth request message from a terminal device, wherein the fourth request message is used to request an edge enabler server corresponding to the terminal device;
determining, based on user plane function network element information corresponding to at least one edge enabler server, a first edge enabler server corresponding to the terminal device; and
sending information about the first edge enabler server to the terminal device.

16. The method according to claim 15, wherein the method further comprises:
obtaining the user plane function network element information corresponding to the at least one edge enabler server.

17. The method according to claim 16, wherein the obtaining the user plane function network element information corresponding to the at least one edge enabler server comprises:
receiving a fifth request message from the at least one edge enabler server, wherein the fifth request message comprises the user plane function network element information corresponding to the edge enabler server.

18. The method according to any one of claims 15 to 17, wherein the fourth request message comprises information about the terminal device, and the determining, based on the user plane function network element information corresponding to the at least one edge enabler server, the first edge enabler server corresponding to the terminal device comprises:
obtaining, based on the information about the terminal device, user plane function network element information corresponding to the terminal device; and
determining the first edge enabler server based on the user plane function network element information corresponding to the terminal device and the user plane function network element information corresponding to the at least one edge enabler server.

19. A communication method, comprising:
sending a first request message to a first edge enabler server, wherein the first request message is used to request an edge application server corresponding to a terminal device.

20. The method according to claim 19, wherein the method further comprises:
receiving information about the first edge enabler server and indication information from an edge configuration server, wherein the indication information indicates whether traffic influence has been performed on a candidate user plane function network element, and the candidate user plane function network element is a user plane function network element corresponding to one or more of the at least one edge application server.

21. The method according to claim 20, wherein the first request message comprises the indication information.

22. The method according to claim 20 or 21, wherein the method further comprises:
receiving, from the first edge enabler server, user plane function network element information corresponding to at least one edge application server corresponding to the terminal device; and
determining the first edge application server based on at least one of the indication information, user plane function network element information corresponding to the terminal device, and the user plane function network element information of the at least one edge application server.

23. The method according to any one of claims 19 to 22, wherein the method further comprises:
receiving a first response message from the first edge enabler server, wherein the first response message is in response to the first request message, and the first response message comprises the information about the first edge application server or the at least one edge application server corresponding to the terminal device.

24. A communication apparatus, comprising a unit performing the method according to any one of claims 1 to 11, or a unit performing the method according to any one of claims 12 to 14, or a unit performing the method according to any one of claims 15 to 18, or a unit performing the method according to any one of claims 19 to 23.

25. A communication apparatus, comprising a processor, wherein the processor is configured to execute a computer program or instructions, and when the computer program or the instructions are executed by the processor, the apparatus is enabled to perform the method according to any one of claims 1 to 11, or perform the method according to any one of claims 12 to 14, or perform the method according to any one of claims 15 to 18, or perform the method according to any one of claims 19 to 23.

26. The apparatus according to claim 25, wherein the communication apparatus further comprises a memory, and the memory stores the computer program or the instructions.

27. A computer-readable storage medium, wherein the computer-readable storage medium stores a computer program or computer instructions, and when the computer program or the computer instructions are executed by a processor, the method according to any one of claims 1 to 11, or the method according to any one of claims 12 to 14, or the method according to any one of claims 15 to 18, or the method according to any one of claims 19 to 23 is implemented.

28. A computer program product comprising program instructions, wherein when the computer program instructions are run on a computer, the method according to any one of claims 1 to 11, the method according to any one of claims 12 to 14, the method according to any one of claims 15 to 18, or the method according to any one of claims 19 to 23 is implemented.

29. A chip system, comprising at least one processor, a memory, and an interface circuit, wherein the memory, the interface circuit, and the at least one processor are interconnected through a line, the at least one memory stores instructions, and when the instructions are executed by the processor, the method according to any one of claims 1 to 11, or the method according to any one of claims 12 to 14, or the method according to any one of claims 15 to 18, or the method according to any one of claims 19 to 23 is implemented.

30. A communication system, wherein the communication system comprises an edge enabler server and an edge configuration server, the edge enabler server is configured to perform the method according to any one of claims 1 to 14, and the edge configuration server is configured to perform the method according to any one of claims 15 to 18.

31. The system according to claim 30, wherein the system further comprises a terminal device, and the terminal device is configured to perform the method according to any one of claims 19 to 23.
